# EUROPEAN PATENT SPECIFICATION

(11) **EP 3 929 027 B1**
(45) Date of publication and mention of the grant of the patent: **01.03.2023**
(21) Application number: 20835403.5
(22) Date of filing: 27.05.2020
(51) Int. Cl.: B60L 53/60, B60L 53/31, H02J 7/00

(54) **CHARGING PILE SYSTEM MANAGEMENT METHOD AND CHARGING PILE SYSTEM**
VERFAHREN ZUR VERWALTUNG EINES LADESÄULENSYSTEMS UND LADESÄULENSYSTEM
PROCÉDÉ DE GESTION DE SYSTÈME DE PILE DE CHARGE, ET SYSTÈME DE PILE DE CHARGE

(30) Priority: 29.06.2019 CN 201910581393
(43) Date of publication of application: 29.12.2021
(73) Proprietor: Huawei Digital Power Technologies Co., Ltd., Shenzhen, 518043 (CN)
(72) Inventor: ZHOU, Lei, Shenzhen, Guangdong 518129 (CN); WANG, Shaohua, Shenzhen, Guangdong 518129 (CN); GE, Jing, Shenzhen, Guangdong 518129 (CN)
(74) Representative: Thun, Clemens
(86) International application number: PCT/CN2020/092725
(87) International publication number: WO 2021/000669

(56) References cited:
- CN-A- 106 143 198
- CN-A- 107 492 941
- CN-A- 109 606 180
- CN-B- 105 896 690

## Description

### TECHNICAL FIELD

This application relates to the field of electric vehicle charging technologies, and in particular, to a method for managing a charging pile system and a charging pile system.

### BACKGROUND

A charging pile system is used to convert electrical energy of a power grid into direct currents of different voltages and different currents, to directly charge a battery of an electric vehicle by using a charging connection apparatus. A conventional direct-current charging pile system includes an input bus, a plurality of charging modules, a plurality of switch components, and a plurality of charging terminals. The input bus is configured to connect an input power supply to the plurality of charging modules. The charging module is configured to convert electrical energy of the input bus into a direct current of a specification needed by the electric vehicle. In addition, in a manner of combining closing and disconnection of the plurality of switch components, the plurality of charging modules are configured in parallel and then configured for one charging terminal, to charge the battery of the electric vehicle by using the charging terminal. However, power configured by the plurality of charging modules connected in parallel for the electric vehicle cannot accurately meet needed power of the electric vehicle, and consequently usability of the charging pile system is poor. CN107492941A refers to an airport ground power supply based charging pile device, has power supply input module fixedly connected with power supply module through bus, and control module controls power supply input module to charge charging pile module.

CN105896690B refers to a mixed energy system for electric vehicle charging and monitoring device, has solar energy controller provided with multiple solar energy arrays, and DC-DC inverter controller whose output end is connected to direct current charging connector.

### SUMMARY

Embodiments of this application provide a method for managing a charging pile system and a charging pile system. By using the method for managing a charging pile system, the charging pile system can accurately meet a charging requirement of a to-be-charged device. These effects are achieved by the subject matter of the independent claims. Further implementation forms are provided in the dependent claims.

According to a first aspect, an embodiment of this application provides a method for managing a charging pile system. The charging pile system includes at least one alternating current/direct current (Alternating Current/Direct Current, AC/DC) module, a bus module, a power scheduling module, a plurality of direct current/direct current (Direct Current/Direct Current, DC/DC) modules, and a plurality of charging terminals that are connected to the plurality of DC/DC modules in a one-to-one correspondence.

The AC/DC module is configured to convert an alternating current of a power supply into a direct current. Optionally, the AC/DC module is configured to convert a high-voltage alternating current into a high-voltage direct current. A voltage of the high-voltage direct current is in a range of 500 volts to 1500 volts. In this case, a cable diameter of a conducting wire connected between the AC/DC module and the bus module is relatively small, and costs are also relatively low.

The bus module is configured to combine high-voltage direct currents converted by all AC/DC modules, and is configured to distribute a combined high-voltage direct current to each DC/DC module. Output ends of a plurality of AC/DC modules are connected to input ends of the plurality of DC/DC modules by using the bus module. Optionally, the bus module may be but is not limited to a conducting wire. For example, the bus module may alternatively be a combiner box.

The power scheduling module is configured to: determine a signal transmitted by each AC/DC module and a signal transmitted by each DC/DC module, and control output power on each DC/DC module. In addition, the power scheduling module is connected to the bus module. It may be understood that the power scheduling module may be used as an independent part, or may be integrated into one or more modules in the AC/DC module, the bus module, and the DC/DC module. In other words, the power scheduling module is a component in one or more modules in the plurality of AC/DC modules, the bus module, and the plurality of DC/DC modules.

The DC/DC module is configured to convert a direct current into a direct current. Optionally, the DC/DC module is configured to convert a high-voltage direct current into a low-voltage direct current. A voltage of the low-voltage direct current is in a range of 300 volts to 400 volts. In this case, a voltage range of the low-voltage direct current can meet a voltage requirement of a to-be-charged device. For example, the to-be-charged device is an electric vehicle.

The charging terminal is configured to charge the to-be-charged device based on transmit power determined by the corresponding DC/DC module. In other words, when the DC/DC module determines transmit power transmitted by the power scheduling module, the DC/DC module charges the to-be-charged device by using the charging terminal.

In this application, when a to-be-charged device is connected to the charging terminal, the to-be-charged device has not entered a charging state. In this case, in this embodiment, the to-be-charged device is defined as a first to-be-charged device, a charging terminal connected to the to-be-charged device is a first charging terminal, and a DC/DC module connected to the first charging terminal is a first DC/DC module.

In addition, a to-be-charged device in the charging state is defined as a second to-be-charged device. A charging terminal connected to the second to-be-charged device is a second charging terminal. A DC/DC module connected to the second charging terminal is a second DC/DC module.

The method includes:
when the first charging terminal in the plurality of charging terminals is connected to the first to-be-charged device, the power scheduling module determines first needed power P_{nee/1} transmitted by the first DC/DC module that is correspondingly connected to the first charging terminal.

It may be understood that the first to-be-charged device has a charging port, and the first charging terminal may be connected to the charging port by using a charging wire. The first to-be-charged device may be charged by using the charging port, and may also transmit a communication signal through the charging port. In this case, the power scheduling module receives an electrical signal transmitted by the first to-be-charged device, and determines that the electrical signal is the first needed power P_{nee/1}. In another implementation, when the first charging terminal is connected to the first to-be-charged device, the first to-be-charged device may alternatively be communicatively connected to the first DC/DC module by using a radio signal.

The power scheduling module determines total surplus power transmitted by the at least one AC/DC modules.

It may be understood that, when the AC/DC module does not transmit a current to the DC/DC module, transmitted power of the AC/DC module is 0. When the AC/DC module transmits a current to the DC/DC module, transmitted power is calculated based on a product of a value of a transmitted voltage and a value of a transmitted current.

The power scheduling module transmits first transmit power P_{tra/1} to the first DC/DC module based on a value relationship between the first needed power P_{nee/1} and the total surplus power P_{AC/DC/TSur}.

In this embodiment, when the power scheduling module transmits the first transmit power P_{tra/1} to the first DC/DC module, the first DC/DC module charges the first to-be-charged device based on the first transmit power P_{tra/1}. In this case, the first to-be-charged device obtains charging power whose value is the first transmit power P_{tra/1}. It may be understood that, because the power scheduling module can transmit the first transmit power P_{tra/1} based on the value relationship between the first needed power P_{nee/1} and the total surplus power P_{AC/DC/TSur}, a granularity of allocated power of the charging pile system is relatively small.

In an embodiment, when the first needed power P_{nee/1} is less than or equal to the total surplus power P_{AC/DC/TSur}, a ratio of the first transmit power P_{tra/1} to the first needed power P_{nee/1} falls within a preset range.

It may be understood that, when the power scheduling module transmits the first transmit power P_{tra/1} to the first DC/DC module, the first DC/DC module charges the first to-be-charged device based on the first transmit power P_{tra/1}. In this case, the first to-be-charged device obtains charging power whose value is the first needed power P_{nee/1}. In another implementation, currents may alternatively be output to the first DC/DC module by using some AC/DC modules. Specifically, this is flexibly set based on a condition.

In addition, the preset range is a value range [a, b] that is prestored on the power scheduling module. Optionally, [0.9, 1.1] is all values from 0.9 to 1.1. When the power scheduling module needs to use the preset range, the power scheduling module may directly invoke the preset range.

In this embodiment, in the foregoing method, when the first needed power P_{nee/1} is less than or equal to the total surplus power P_{AC/DC/TSur}, the power scheduling module can transmit the first transmit power P_{tra/1} to the first DC/DC module, and the first transmit power P_{tra/1} is close to the first needed power P_{nee/1}, to control the first DC/DC module to output the first transmit power P_{tra/1} that meets a charging requirement of the first to-be-charged device. In this case, the first to-be-charged device can obtain charging power whose value is the first needed power P_{nee/1}. Therefore, power that can be obtained by the first to-be-charged device is close to needed power of the first to-be-charged device, so that usability of the charging pile system can be significantly improved.

In an embodiment, when the first needed power P_{nee/1} is greater than the total surplus power P_{AC/DC/TSur}, a ratio of the first transmit power P_{tra/1} to the total surplus power P_{AC/DC/TSur} falls within a preset range.

In this embodiment, when the first needed power P_{nee/1} is greater than the total surplus power P_{AC/DC/TSur}, the power scheduling module controls the DC/DC module to output the total surplus power P_{AC/DC/TSur} to the first to-be-charged device. In this case, the total surplus power P_{AC/DC/TSur} is closer to the charging requirement of the first to-be-charged device. This improves user experience of the charging pile system 100.

In an embodiment, when the first needed power P_{nee/1} is greater than the total surplus power P_{AC/DC/TSur}, a ratio of the first transmit power P_{tra/1} to first output power P_{put/1} falls within a preset range, where P_{put/1}=k₁×P_{nee/1}; and k₁=P_{Trat}/P_{Tnee}; where k₁ is an output power ratio, P_{Trat} is total rated power of all the AC/DC modules, P_{Tnee} is a sum of all second needed power P_{nee/2} and the first needed power P_{nee/1}, and the second needed power P_{nee/2} is needed power of a second to-be-charged device corresponding to the second DC/DC module, where a charging terminal connected to the second to-be-charged device in the charging state is the second charging terminal, and a DC/DC module corresponding to the second charging terminal in the plurality of charging terminals is the second DC/DC module; and
the method further includes:
the power scheduling module determines second needed power P_{nee/2} transmitted by all second DC/DC modules in the plurality of DC/DC modules.

It may be understood that, the power scheduling module receives electrical signals transmitted by all the second DC/DC modules in the plurality of DC/DC modules, and determines the second needed power P_{nee/2} from the electrical signals.

The second DC/DC module determines the second needed power P_{nee/2} in a plurality of manners.

In an implementation, after the second DC/DC module receives an electrical signal of the second to-be-charged device through the second charging terminal, and determines a second needed voltage and a second needed current from the electrical signal, the second DC/DC module calculates the second needed power P_{nee/2} based on the second needed voltage and the second needed current. The power scheduling module determines the second needed power P_{nee/2} transmitted by the second DC/DC module.

In another implementation, the second DC/DC module receives an electrical signal of the second to-be-charged device through the second charging terminal, and determines the second needed power P_{nee/2} from the electrical signal.

Optionally, that the power scheduling module determines the second needed power P_{nee/2} includes:
the power scheduling module presets a transmission period in which the second DC/DC module transmits the second needed power P_{nee/2}. For example, the period is 10 minutes.

The power scheduling module determines, based on the transmission period, the second needed power P_{nee/2} transmitted by the second DC/DC module. For example, the power scheduling module determines, once every 10 minutes, the second needed power P_{nee/2} transmitted by the second DC/DC module. Therefore, the second needed power P_{nee/2} determined by the power scheduling module is closer to power actually needed by the second to-be-charged device, to avoid a case in which power allocated by the AC/DC module is greater than the power actually needed by the second to-be-charged device, so that the charging pile system can accurately provide a power requirement for the second to-be-charged device.

The power scheduling module determines total rated power transmitted by the at least one AC/DC modules. Optionally, the power scheduling module receives an electrical signal of rated power transmitted by each AC/DC module, and determines the rated power from the electrical signal. In this case, the power scheduling module determines the total rated power transmitted by the at least one AC/DC modules.

Optionally, the power scheduling module calculates the total rated power P_{Trat} based on a sum of all the determined rated power, and calculates the total needed power P_{Tnee} based on a sum of the determined second needed power P_{nee/2} and the determined first needed power P_{nee/1}. In addition, the power scheduling module calculates the output power ratio k₁ based on the calculated total rated power P_{Trat} and the calculated total needed power P_{Tnee}. Finally, the power scheduling module calculates the first output power P_{put/1} based on the output power ratio k₁.

In this embodiment, in the foregoing method, when the first needed power P_{nee/1} is greater than the total surplus power P_{AC/DC/TSur}, the power scheduling module controls the first DC/DC module to output the first output power P_{put/1} to the first to-be-charged device, so that the first to-be-charged device starts to be charged.

It may be understood that, in this implementation, the total rated power P_{Trat} is allocated to the first to-be-charged device and the second to-be-charged device in proportion. Therefore, the first output power P_{put/1} received by the first to-be-charged device is not equal to 0, to ensure that the first to-be-charged device can be "immediately charged after arriving". In other words, once the first to-be-charged device is connected to the first charging terminal, the first DC/DC module can charge the first to-be-charged device by using the first charging terminal, to avoid a case in which a user gives up charging the first to-be-charged device because the user needs to wait for excessively long charging time and consequently a user quantity of the charging pile system is reduced.

In addition, because the power scheduling module allocates the total rated power P_{Trat} to the first to-be-charged device in proportion, the first to-be-charged device can obtain the first transmit power P_{tra/1} in a relatively equitable manner.

In an embodiment, when the first needed power P_{nee/1} is greater than the total surplus power P_{AC/DC/TSur}, the power scheduling module transmits third transmit power P_{tra/3} to the second DC/DC module, so that the second DC/DC module charges the second to-be-charged device based on the third transmit power P_{tra/3} by using the second charging terminal. A ratio of the third transmit power P_{tra/3} to second output power P_{put/2} falls within a preset range, where

P_{put/2}=k₁×P_{nee/2}.

Optionally, the power scheduling module calculates the third transmit power P_{tra/3} based on an output power ratio k₁.

In this embodiment, in the foregoing method, when the first needed power P_{nee/1} is greater than the total surplus power P_{AC/DC/TSur}, the power scheduling module transmits the third transmit power P_{tra/3} to the second DC/DC module, to control the second DC/DC module to output the third transmit power P_{tra/3} that meets a charging requirement of the second to-be-charged device. In this case, the second to-be-charged device can obtain charging power whose value is the third transmit power P_{tra/3}. Therefore, the first to-be-charged device can obtain more accurate needed power, so that usability of the charging pile system can be significantly improved.

In addition, because the power scheduling module allocates the total rated power P_{Trat} to the second to-be-charged device in proportion, the second to-be-charged device can obtain the third transmit power P_{tra/3} in a relatively equitable manner.

In an embodiment, when the first needed power P_{nee/1} is greater than the total surplus power P_{AC/DC/TSur}, the power scheduling module determines a priority of the first to-be-charged device.

Optionally, when the first charging terminal in the plurality of charging terminals is connected to the first to-be-charged device, the power scheduling module receives identification information sent by the first to-be-charged device. The identification information may include but is not limited to a license plate number, an identity card number of the user, or a name of the user, and may even be a recognizable photo of the user.

The power scheduling module invokes a prestored priority database, and determines the priority of the first to-be-charged device from the priority database based on the identification information.

The power scheduling module determines the first transmit power P_{tra/1} based on a relationship between the priority of the first to-be-charged device and a priority of the second to-be-charged device, where a DC/DC module corresponding to a second charging terminal in the plurality of charging terminals is a second DC/DC module, and a charging terminal connected to the second to-be-charged device in the charging state is the second charging terminal.

In this implementation, in the foregoing method, a to-be-charged device of a higher priority can be preferentially charged, to better meet a charging requirement of the to-be-charged device of the higher priority.

Further, the method further includes:
when the priority of the first to-be-charged device is higher than a priority of one or more second to-be-charged devices, the power scheduling module determines third needed power P_{nee/3} of a type-1 to-be-charged device, where the type-1 to-be-charged device is a second to-be-charged device whose priority is lower than the priority of the first to-be-charged device.

Optionally, the power scheduling module presets a transmission period in which the third needed power P_{nee/3} is transmitted to the type-1 to-be-charged device. For example, the transmission period is 10 minutes.

The power scheduling module determines, based on the transmission period, the third needed power P_{nee/3} transmitted by the second DC/DC module. Therefore, the third needed power P_{nee/3} transmitted by the second DC/DC module is determined once every 10 minutes by using the power scheduling module, so that the third needed power P_{nee/3} determined by the power scheduling module is closer to power actually needed by the type-1 to-be-charged device 621. In other words, power allocated by the AC/DC module to the type-1 to-be-charged device is avoided from being greater than the actually needed power.

The power scheduling module determines the first transmit power P_{tra/1} based on a value relationship between the first needed power P_{nee/1} and allocatable power Pₐₗₗₒ, and the allocatable power Pₐₗₗₒ is equal to a sum of the total surplus power P_{AC/DC/TSur} and third needed power P_{nee/3} of all type-1 to-be-charged devices.

In this embodiment, because the priority of the first to-be-charged device is higher than the priority of the one or more second to-be-charged devices, a charging requirement of the first to-be-charged device of a higher priority is better met by using the value relationship between the first needed power and the allocatable power.

In an implementation, when the first needed power P_{nee/1} is greater than or equal to the allocatable power Pₐₗₗₒ, a ratio of the first transmit power P_{tra/1} to the allocatable power Pₐₗₗₒ falls within a preset range.

In this implementation, because the first needed power P_{nee/1} is greater than or equal to the allocatable power Pₐₗₗₒ, the allocatable power Pₐₗₗₒ cannot meet or exactly meets the charging requirement of the first to-be-charged device. In this case, the first transmit power P_{tra/1} transmitted to the first DC/DC module by using the power scheduling module is close to the allocatable power Pₐₗₗₒ, so that the charging requirement of the first to-be-charged device can be better met. This ensures that charging of the first to-be-charged device can be more quickly completed.

The method further includes:
the power scheduling module transmits fourth transmit power P_{tra/4} to a second DC/DC module corresponding to the type-1 to-be-charged device, where the fourth transmit power P_{tra/4} is equal to 0.

It may be understood that, because the fourth transmit power P_{tra/4} is equal to 0, the second charging terminal stops charging the type-1 to-be-charged device. In this case, in the foregoing method, the type-1 to-be-charged device can be motivated to develop towards a higher priority.

In an embodiment, when the first needed power P_{nee/1} is less than the allocatable power Pₐₗₗₒ, a ratio of the first transmit power P_{tra/1} to the first needed power P_{nee/1} falls within a preset range.

Because the first needed power P_{nee/1} is less than the allocatable power Pₐₗₗₒ, the allocatable power Pₐₗₗₒ can meet the charging requirement of the first to-be-charged device. In this case, the first transmit power P_{tra/1} transmitted by using the power scheduling module is close to the first needed power P_{nee/1}. In this case, the first DC/DC module can accurately provide needed power for the first to-be-charged device, to better meet the charging requirement of the first to-be-charged device.

In an embodiment, when the first needed power P_{nee/1} is greater than (i+1)^{th} power Pᵢ₊₁ and the first needed power P_{nee/1} is less than or equal to i^{th} power Pᵢ, the power scheduling module transmits the first output power P_{put/1} to a second DC/DC module corresponding to a type-1 to-be-charged device whose priority is i, so that the second DC/DC module charges, based on the first output power P_{put/1} by using the second charging terminal, the type-1 to-be-charged device whose priority is i. A ratio of the first output power P_{put/1} to i^{th} surplus power P_{Sur/i} falls within a preset range.

It may be understood that, because the first needed power P_{nee/1} is less than the i^{th} power Pᵢ, and the allocatable power Pₐₗₗₒ is equal to the sum of the total surplus power P_{AC/DC/TSur} and the third needed power P_{nee/3} of all the type-1 to-be-charged devices, the first needed power P_{nee/1} is also obviously less than the allocatable power Pₐₗₗₒ.

The power scheduling module transmits fifth transmit power P_{tra/5} to second DC/DC modules corresponding to all type-1 to-be-charged devices whose priorities are lower than i, and the fifth transmit power P_{tra/5} is 0. In this case, the second charging terminal stops charging all the type-1 to-be-charged devices whose priorities are lower than i; where P_{Sur/i}=Pᵢ-P_{nee/1}.

In other words, the i^{th} surplus power P_{Sur/i} is equal to a difference between the i^{th} power Pᵢ and the first needed power P_{nee/1}.

Optionally, the power scheduling module calculates the i^{th} power Pᵢ based on a sum of the total surplus power P_{AC/DC/TSur} and third needed power P_{nee/3} of all type-1 to-be-charged devices whose priorities are lower than or equal to i.

The power scheduling module calculates the (i+1)^{th} power Pi+i based on a sum of the total surplus power P_{AC/DC/TSur} and third needed power P_{nee/3} of all type-1 to-be-charged devices whose priorities are lower than or equal to i+1.

The power scheduling module calculates the i^{th} surplus power P_{Sur/i} based on a difference between the i^{th} power Pᵢ and the first needed power P_{nee/1}.

In this implementation, because the power scheduling module reallocates, to the first to-be-charged device of the higher priority, a part of power allocated to the type-1 to-be-charged device, the power allocated to the type-1 to-be-charged device still has another surplus part. In this case, the power scheduling module allocates the another surplus part of power to the second to-be-charged device of a highest priority in the type-1 to-be-charged device, so that charging of a type-1 to-be-charged device of a higher priority can be quickly completed, to better meet a charging requirement of the to-be-charged device of the higher priority.

In an embodiment, when the priority of the first to-be-charged device is lower than or equal to a priority of any second to-be-charged device, power transmitted by the power scheduling module to the first DC/DC module is 0. In this case, the first DC/DC module does not charge the first to-be-charged device. Therefore, in this method, the first to-be-charged device of a relatively low priority can be motivated to develop towards to a higher priority.

In an embodiment, when the first needed power P_{nee/1} is greater than or equal to the allocatable power Pₐₗₗₒ, a ratio of the first transmit power P_{tra/1} to third output power P_{put/3} falls within a preset range, where P_{put/3}=k₂×P_{nee/1}; k₂=Pₐₗₗₒ/P_{Tnee}; and P_{Tnee}=Pₐₗₗₒ+P_{nee/1}; where k₂ is an output power ratio, and P_{Tnee} is total needed power.

In this embodiment, because the third output power P_{put/3} cannot be 0, the first to-be-charged device can be "immediately charged after arriving". In other words, once the first to-be-charged device is connected to the first charging terminal, the first DC/DC module can charge the first to-be-charged device by using the first charging terminal, to avoid a case in which a user gives up charging the first to-be-charged device because the user needs to wait for excessively long charging time and consequently a user quantity of the charging pile system is reduced.

In addition, because the priority of the first to-be-charged device is higher than the priority of the one or more second to-be-charged devices, the first to-be-charged device of the higher priority can also be preferentially charged by using the foregoing method.

In addition, because in the method in this embodiment, the allocatable power Pₐₗₗₒ is allocated to the first to-be-charged device in proportion, power allocated to the first to-be-charged device is also relatively equitable.

In an embodiment, when the first needed power P_{nee/1} is greater than or equal to the allocatable power Pₐₗₗₒ, the power scheduling module transmits sixth transmit power P_{tra/6} to a second DC/DC module corresponding to the type-1 to-be-charged device, where a ratio of the sixth transmit power P_{tra/6} to fourth output power P_{put/4} falls within a preset range; where P_{put/4}=k₂×P_{nee/3}.

Optionally, the power scheduling module 30 calculates the fourth output power P_{put/4} based on a product of the output power ratio k₂ and the third needed power P_{nee/3}.

In addition, in the method in this embodiment, the allocatable power Pₐₗₗₒ is allocated to the first to-be-charged device and the type-1 to-be-charged device in proportion, to equitably allocate power to the first to-be-charged device and the type-1 to-be-charged device. In other words, a case in which use experience of the user is affected because some to-be-charged devices are not charged and some to-be-charged devices are being charged.

In addition, although the priority of the first to-be-charged device is higher than the priority of the one or more second to-be-charged devices, the first to-be-charged device arrives later than the type-1 to-be-charged device. Therefore, the allocatable power Pₐₗₗₒ is allocated to the first to-be-charged device and the type-1 to-be-charged device in proportion, so that it is ensured that the first to-be-charged device of the higher priority can be preferentially charged, and the type-1 to-be-charged device can also continue to be charged.

In some embodiments, the charging pile system may further include a detection module. The detection module is configured to detect whether a circuit fault occurs between the bus module and the DC/DC module, so that when one charging circuit is faulty, the faulty charging circuit does not affect another charging circuit.

The detection module is configured to detect whether a circuit fault occurs between the bus module and the DC/DC module. When the circuit fault occurs between the bus module and the DC/DC module, the power scheduling module controls the detection module, so that the bus module and the first DC/DC module are in an open-circuit state. It may be understood that the detection module connected between the bus module and the first DC/DC module is a first detection module. The first detection module is configured to detect whether a circuit fault occurs between the bus module and the first DC/DC module. The detection module connected between the bus module and the second DC/DC module is a second detection module. The second detection module is configured to detect whether a circuit fault occurs between the bus module and the second DC/DC module.

In an embodiment, when the first detection module detects that a load current between the bus module and the first DC/DC module is greater than or equal to a preset load current threshold, and/or a leakage current between the bus module and the first DC/DC module is greater than or equal to a preset leakage current threshold, the power scheduling module controls the first detection module, so that the bus module and the first DC/DC module are in an open-circuit state.

Optionally, before the first detection module detects that the load current between the bus module and the first DC/DC module is greater than or equal to the preset load current threshold, and/or the leakage current between the bus module and the first DC/DC module is greater than or equal to the preset leakage current threshold, the detection module prestores the preset load current threshold, or the detection module prestores the preset leakage current threshold. The load current threshold may be preset based on a bearing capacity of a conducting wire between the bus module and the first DC/DC module.

In this embodiment, in the foregoing method, in a process of charging the first to-be-charged device, a case in which the entire charging pile system cannot run because a load current of a charging circuit of the first to-be-charged device is greater than or equal to the preset load current threshold or a leakage current is greater than or equal to the preset leakage current threshold is avoided. In other words, when the charging circuit of the first to-be-charged device is faulty, the charging circuit of the first to-be-charged device does not affect a charging circuit of the second to-be-charged device.

An embodiment of this application further provides a charging pile system. The charging pile system includes at least one AC/DC module, a bus module, a power scheduling module, a plurality of DC/DC modules, and a plurality of charging terminals that are connected to the plurality of DC/DC modules in a one-to-one correspondence, an output end of the at least one AC/DC module is connected to input ends of the plurality of DC/DC modules by using the bus module, the power scheduling module is connected to the bus module, and the charging terminal is configured to charge a to-be-charged device based on transmit power determined by the corresponding DC/DC module.

The power scheduling module is configured to: when a first charging terminal in the plurality of charging terminals is connected to a first to-be-charged device, determine first needed power P_{nee/1} transmitted by a first DC/DC module correspondingly connected to the first charging terminal, where the first needed power P_{nee/1} is needed power of the first to-be-charged device.

The power scheduling module is further configured to: determine total surplus power P_{AC/DC/TSur} transmitted by the at least one AC/DC modules, and transmit first transmit power P_{tra/1} to the first DC/DC module based on a value relationship between the first needed power P_{nee/1} and the total surplus power P_{AC/DC/TSur}, where the total surplus power P_{AC/DC/TSur} is a difference between total rated power of the at least one AC/DC modules and transmitted power.

In this embodiment, when the power scheduling module transmits the first transmit power P_{tra/1} to the first DC/DC module, the first DC/DC module charges the first to-be-charged device based on the first transmit power P_{tra/1}. In this case, the first to-be-charged device obtains charging power whose value is the first transmit power P_{tra/1}. It may be understood that, because the power scheduling module can transmit the first transmit power P_{tra/1} based on a value relationship between the first needed power P_{nee/1} and the total surplus power P_{AC/DC/TSur}, a granularity of allocated power of the charging pile system is relatively small.

In an embodiment, when the first needed power P_{nee/1} is less than or equal to the total surplus power P_{AC/DC/TSur}, a ratio of the first transmit power P_{tra/1} to the first needed power P_{nee/1} falls within a preset range.

In this embodiment, the power scheduling module can transmit the first transmit power P_{tra/1} to the first DC/DC module, where the first transmit power P_{tra/1} is close to the first needed power P_{nee/1}, to control the first DC/DC module to output first transmit power P_{tra/1} that meets a charging requirement of the first to-be-charged device. In this case, the first to-be-charged device can obtain charging power whose value is the first needed power P_{nee/1}. Therefore, power that can be obtained by the first to-be-charged device is close to needed power of the first to-be-charged device, so that usability of the charging pile system can be significantly improved.

In an embodiment, when the first needed power P_{nee/1} is greater than the total surplus power P_{AC/DC/TSur}, a ratio of the first transmit power P_{tra/1} to the total surplus power P_{AC/DC/TSur} falls within a preset range.

In this embodiment, when the first needed power P_{nee/1} is greater than the total surplus power P_{AC/DC/TSur}, the power scheduling module controls the DC/DC module to output the total surplus power P_{AC/DC/TSur} to the first to-be-charged device. In this case, the total surplus power P_{AC/DC/TSur} is closer to the charging requirement of the first to-be-charged device. This improves user experience of the charging pile system 100.

In an embodiment, when the first needed power P_{nee/1} is greater than the total surplus power P_{AC/DC/TSur}, a ratio of the first transmit power P_{tra/1} to first output power P_{put/1} falls within a preset range, where P_{put/1}=k₁×P_{nee/1}; and k₁=P_{Trat}/P_{Tnee}; where k₁ is an output power ratio, P_{Trat} is total rated power of the at least one AC/DC modules, P_{Tnee} is a sum of all second needed power P_{nee/2} and the first needed power P_{nee/1}, and the second needed power P_{nee/2} is needed power of a second to-be-charged device corresponding to a second DC/DC module, where a charging terminal connected to the second to-be-charged device in a charging state is a second charging terminal, and a DC/DC module corresponding to the second charging terminal in the plurality of charging terminals is the second DC/DC module.

The power scheduling module is further configured to: determine total rated power P_{Trat} transmitted by the AC/DC modules, and determine second needed power P_{nee/2} transmitted by all second DC/DC modules in the plurality of DC/DC modules.

In this embodiment, because the power scheduling module allocates the total rated power P_{Trat} to the first to-be-charged device in proportion, the first to-be-charged device can obtain the first transmit power P_{tra/1} in a relatively equitable manner.

In an embodiment, the power scheduling module is further configured to: determine a priority of the first to-be-charged device, and when the first needed power P_{nee/1} is greater than the total surplus power P_{AC/DC/TSur}, transmit the first transmit power P_{tra/1} to the first DC/DC module based on a relationship between the priority of the first to-be-charged device and a priority of a second to-be-charged device.

In this embodiment, in the charging pile system, a to-be-charged device of a higher priority can be preferentially charged, to better meet a charging requirement of the to-be-charged device of the higher priority.

In an embodiment, the power scheduling module is further configured to: determine third needed power P_{nee/3} of a type-1 to-be-charged device, and when the priority of the first to-be-charged device is higher than a priority of one or more second to-be-charged devices, transmit the first transmit power P_{tra/1} to the first DC/DC module based on a value relationship between the first needed power P_{nee/1} and allocatable power Pₐₗₗₒ, where the type-1 to-be-charged device is a second to-be-charged device whose priority is lower than the priority of the first to-be-charged device, and the allocatable power Pₐₗₗₒ is equal to a sum of the total surplus power P_{AC/DC/TSur} and third needed power P_{nee/3} of all type-1 to-be-charged devices.

In this embodiment, because the priority of the first to-be-charged device is higher than the priority of the one or more second to-be-charged devices, a charging requirement of the first to-be-charged device of a higher priority is better met based on the value relationship between the first needed power and the allocatable power.

In an embodiment, when the priority of the first to-be-charged device is lower than or equal to a priority of any second to-be-charged device, the first transmit power P_{tra/1} is 0. In this case, the first DC/DC module does not charge the first to-be-charged device. Therefore, in the charging pile system, the first to-be-charged device of a relatively low priority can be motivated to develop towards a higher priority.

In an embodiment, the charging pile system further includes a plurality of detection modules, and the plurality of detection modules are connected between the bus module and the plurality of DC/DC modules in a one-to-one correspondence.

When a first detection module detects that a load current between the bus module and the first DC/DC module is greater than or equal to a preset load current threshold, and/or a leakage current between the bus module and the first DC/DC module is greater than or equal to a preset leakage current threshold, the power scheduling module is further configured to control the first detection module, so that the bus module and the first DC/DC module are in an open-circuit state. The first detection module is connected between the bus module and the first DC/DC module.

In this embodiment, in the charging pile system, in a process of charging the first to-be-charged device, a case in which the entire charging pile system cannot run because a load current of a charging circuit of the first to-be-charged device is greater than or equal to the preset load current threshold or a leakage current is greater than or equal to the preset leakage current threshold is avoided. In other words, when the charging circuit of the first to-be-charged device is faulty, the charging circuit of the first to-be-charged device does not affect a charging circuit of the second to-be-charged device.

### BRIEF DESCRIPTION OF DRAWINGS

FIG. 1 is a schematic structural diagram of a charging pile system in an implementation according to an embodiment of this application;
FIG. 2 is a schematic structural diagram of a charging pile system in another implementation according to an embodiment of this application;
FIG. 3 is a schematic flowchart of an implementation of a method for managing the charging pile system shown in FIG. 1;
FIG. 4 is a schematic diagram of a signal transmission path in the method for managing the charging pile system shown in FIG. 3;
FIG. 5 is a schematic diagram of a current transmission path in the method for managing the charging pile system shown in FIG. 3;
FIG. 6 is a partial schematic flowchart of an implementation of the method for managing the charging pile system shown in FIG. 3;
FIG. 7 is a schematic diagram of a signal transmission path in the method for managing the charging pile system shown in FIG. 6;
FIG. 8 is a partial schematic flowchart of another implementation of the method for managing the charging pile system shown in FIG. 3;
FIG. 9 is a schematic diagram of a signal transmission path in the method for managing the charging pile system shown in FIG. 8;
FIG. 10 is a partial schematic flowchart of still another implementation of the method for managing the charging pile system shown in FIG. 3;
FIG. 11 is a schematic diagram of a signal transmission path in the method for managing the charging pile system shown in FIG. 10;
FIG. 12 is a partial schematic flowchart of still another implementation of the method for managing the charging pile system shown in FIG. 3;
FIG. 13 is a schematic structural diagram of a charging pile system in still another implementation according to an embodiment of this application;
FIG. 14 is a schematic structural diagram of a detection module in the charging pile system shown in FIG. 13; and
FIG. 15 is a schematic flowchart of a method for managing the charging pile system shown in FIG. 13.

### DESCRIPTION OF EMBODIMENTS

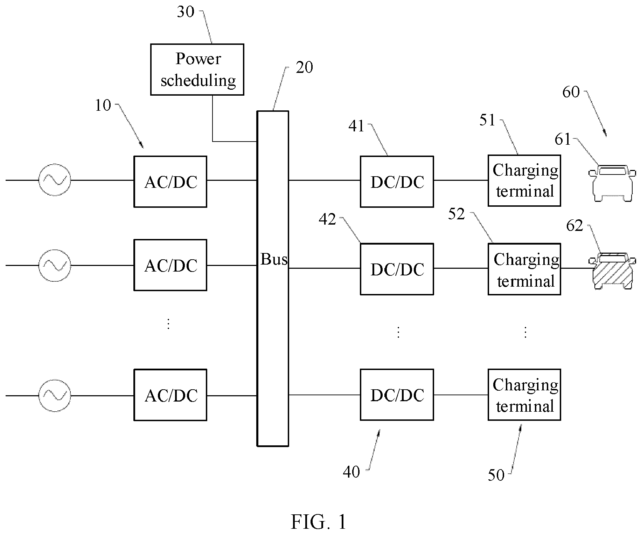

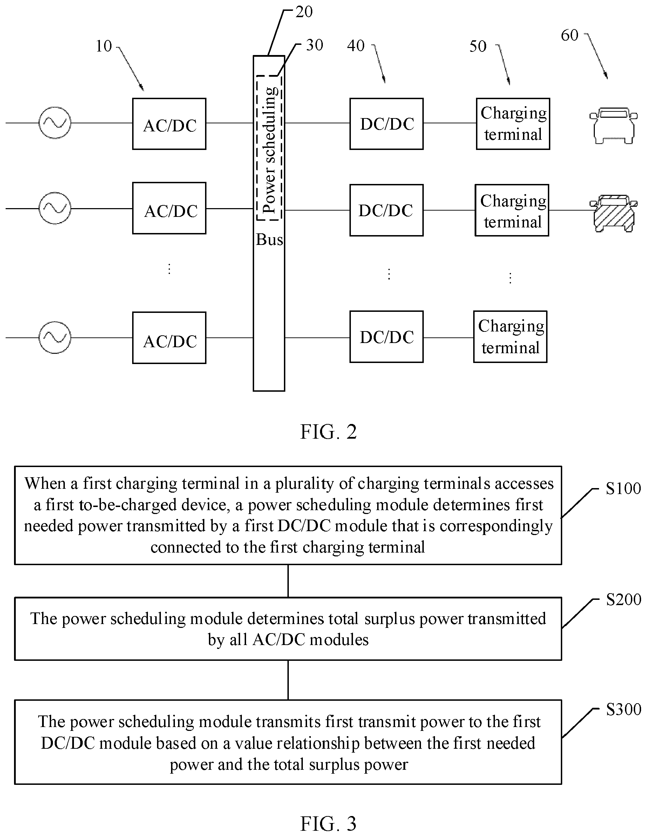

In the embodiments, a structure of a charging pile system 100 in the embodiments and connection relationships and functions of modules of the charging pile system 100 are described by using FIG. 1 and FIG. 2.

FIG. 1 is a schematic structural diagram of a charging pile system 100 in an implementation according to an embodiment of this application. The charging pile system 100 includes at least one alternating current/direct current (Alternating Current/Direct Current, AC/DC) module 10, a bus module 20, a power scheduling module 30, a plurality of direct current/direct current (Direct Current/Direct Current, DC/DC) modules 40, and a plurality of charging terminals 50 that are connected to the plurality of DC/DC modules 40 in a one-to-one correspondence. It may be understood that there may be one or more AC/DC modules 10. FIG. 1 only shows a plurality of AC/DC modules 10. The charging pile system 100 may be applied to charging of another electronic device such as an electric vehicle, a mobile phone, or an ipad. This application sets no specific limitation. In addition, a to-be-charged device 60 in FIG. 1 in this embodiment is described by using an electric vehicle as an example.

The AC/DC module 10 is configured to convert an alternating current of a power supply into a direct current. Optionally, the AC/DC module 10 is configured to convert a high-voltage alternating current into a high-voltage direct current. A voltage of the high-voltage direct current is in a range of 500 volts to 1500 volts. In this case, a cable diameter of a conducting wire connected between the AC/DC module 10 and the bus module 20 is relatively small, and costs are also relatively low.

The bus module 20 is configured to combine high-voltage direct currents converted by all AC/DC modules 10, and is configured to distribute a combined high-voltage direct current to each DC/DC module 40. Output ends of a plurality of AC/DC modules 10 are connected to input ends of the plurality of DC/DC modules 40 by using the bus module 20. Optionally, the bus module 20 may be but is not limited to a conducting wire. For example, the bus module 20 may alternatively be a combiner box.

The power scheduling module 30 is configured to: determine a signal transmitted by each AC/DC module 10 and a signal transmitted by each DC/DC module 40, and control output power on each DC/DC module 40. In addition, the power scheduling module 30 is connected to the bus module 20. It may be understood that the power scheduling module 30 may be used as an independent part, or may be integrated into one or more modules in the plurality of AC/DC modules 10, the bus module 20, and the plurality of DC/DC modules 40. In other words, the power scheduling module 30 is a component in one or more modules in the plurality of AC/DC modules 10, the bus module 20, and the plurality of DC/DC modules 40.

Optionally, FIG. 2 is a schematic structural diagram of a charging pile system 100 in another implementation according to an embodiment of this application. As shown in FIG. 2, the power scheduling module 30 is integrated into the bus module 20. In this case, the power scheduling module 30 is communicatively connected to all AC/DC modules 10 and all DC/DC modules 40. It may be understood that the power scheduling module 30 may be connected to all the AC/DC modules 10 and all the DC/DC modules 40 by using a radio signal, or may be connected to all the AC/DC modules 10 and all the DC/DC modules 40 in a wired manner.

Optionally, the power scheduling module 30 may alternatively be used as an independent part. The power scheduling module 30 is communicatively connected to all the AC/DC modules 10 and all the DC/DC modules 40.

Optionally, the power scheduling module 30 is integrated into the AC/DC module 10. It may be understood that when there is one AC/DC module 10, the power scheduling module 30 is integrated into the AC/DC module 10. The power scheduling module 30 is communicatively connected to all the DC/DC modules 40. When there are a plurality of AC/DC modules 10, the power scheduling module 30 may be integrated into one AC/DC module 10, or may be integrated into two or more AC/DC modules 10. The power scheduling module 30 is communicatively connected to another AC/DC module 10 and all the DC/DC modules 40. When the power scheduling module 30 is integrated into at least one DC/DC module 40, the power scheduling module 30 is communicatively connected to another DC/DC module 40 and all AC/DC modules 10. The power scheduling module 30 may be communicatively connected to another DC/DC module 40 and all the AC/DC modules 10.

The DC/DC module 40 is configured to convert a direct current into a direct current. Optionally, the DC/DC module 40 is configured to convert a high-voltage direct current into a low-voltage direct current. A voltage of the low-voltage direct current is in a range of 300 volts to 400 volts. In this case, a voltage range of the low-voltage direct current can meet a voltage requirement of a to-be-charged device. For example, the to-be-charged device is an electric vehicle.

The charging terminal 50 is configured to charge a to-be-charged device 60 based on transmit power determined by the corresponding DC/DC module 40. In other words, when the DC/DC module 40 determines transmit power transmitted by the power scheduling module 30, the DC/DC module 40 charges the to-be-charged device 60 by using the charging terminal 50. Optionally, the charging terminal 50 is a connection end for charging the to-be-charged device 60.

In this application, when a to-be-charged device 60 is connected to the charging terminal 50, the to-be-charged device 60 has not entered a charging state. In this case, in this embodiment, the to-be-charged device 60 is defined as a first to-be-charged device 61, the charging terminal 50 connected to the first to-be-charged device 61 is a first charging terminal 51, and a DC/DC module 40 connected to the first charging terminal 51 is a first DC/DC module 41.

In addition, a to-be-charged device 60 in the charging state is defined as a second to-be-charged device 62. A charging terminal 50 connected to the second to-be-charged device 62 is a second charging terminal 52. A DC/DC module 40 connected to the second charging terminal 52 is a second DC/DC module 42.

In the following embodiments, a method for managing a charging pile system provided in an embodiment of this application is specifically described based on the structure of the charging pile system shown in FIG. 1.

In an embodiment, by using the following S100, S200, and S300, the power scheduling module 30 can accurately control a value of output power of the first DC/DC module 41, to avoid a case in which another to-be-charged device 60 cannot be charged because too much power is allocated, and also to avoid a case in which a charging requirement of the to-be-charged device 60 cannot be met because too little power is allocated, so that utilization of the charging pile system 100 is improved.

Power concepts involved in this embodiment are described first.
(1) First needed power P_{nee/1} is needed power of the first to-be-charged device 61.
(2) Total surplus power P_{AC/DC/TSur}: When there is one AC/DC module 10, the total surplus power P_{AC/DC/TSur} is surplus power of the AC/DC module 10, to be specific, a difference between rated power of the AC/DC module 10 and transmitted power. When there is more than one AC/DC module 10, the total surplus power P_{AC/DC/TSur} is a sum of surplus power of all AC/DC modules 10, to be specific, the total surplus power P_{AC/DC/TSur} is a difference between total rated power of all the AC/DC modules 10 and transmitted power.
(3) First transmit power P_{tra/1} is power transmitted by the power scheduling module 30 to the first DC/DC module 41.

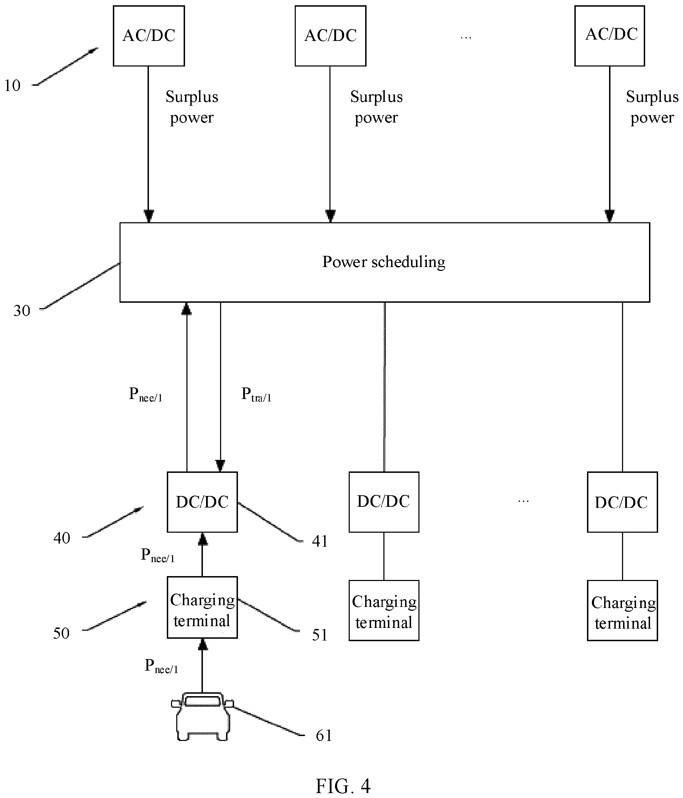

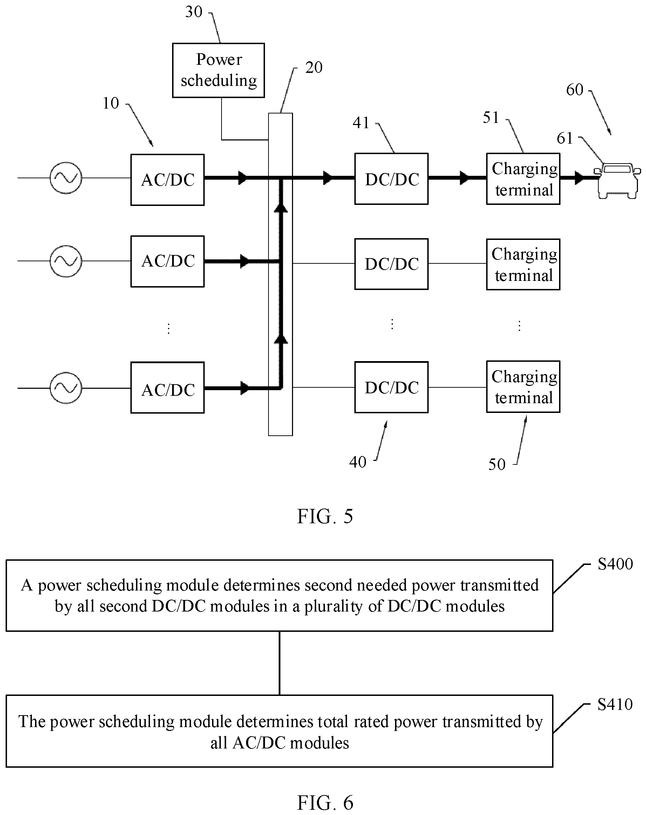

Refer to FIG. 3 to FIG. 5. FIG. 3 is a schematic flowchart of an implementation of a method for managing the charging pile system 100 shown in FIG. 1. FIG. 4 is a schematic diagram of a signal transmission path in the method for managing the charging pile system 100 shown in FIG. 3. FIG. 5 is a schematic diagram of a current transmission path in the method for managing the charging pile system shown in FIG. 3. When the first to-be-charged device 61 starts to be charged, to clearly indicate a current transmission path, FIG. 5 is only a schematic diagram of a current transmission path when the first to-be-charged device 61 is being charged. However, it may be understood that when the first to-be-charged device 61 starts to be charged, a current transmitted by the AC/DC module also flows to another charging terminal 50. In addition, the method for managing the charging pile system 100 according to an embodiment of this application is described with reference to FIG. 3 to FIG. 5. The method is performed by the power scheduling module 30 in FIG. 1. The method includes but is not limited to S100, S200, and S300. In addition, a ranking of S100 and a ranking of S200 may alternatively be exchanged. This application sets no specific limitation.

S100: When the first charging terminal 51 in the plurality of charging terminals 50 is connected to the first to-be-charged device 61, the power scheduling module 30 determines first needed power P_{nee/1} transmitted by the first DC/DC module 41 that is correspondingly connected to the first charging terminal 51.

It may be understood that the first to-be-charged device 61 has a charging port, and the first charging terminal 51 may be connected to the charging port by using a charging wire. The first to-be-charged device 61 may be charged by using the charging port, and may also transmit a communication signal through the charging port. In this case, the power scheduling module 30 receives an electrical signal transmitted by the first to-be-charged device 61, and determines that the electrical signal is the first needed power P_{nee/1}. In another implementation, when the first charging terminal 51 is connected to the first to-be-charged device 61, the first to-be-charged device 61 may alternatively be communicatively connected to the first DC/DC module 41 by using a radio signal.

Two implementations in which the first DC/DC module 41 determines the first needed power P_{nee/1} are provided below. Specific descriptions are as follows:
Optionally, when the first charging terminal 51 is connected to the first to-be-charged device 61, the first DC/DC module 41 receives an electrical signal through the first charging terminal 51, and determines a first needed voltage and a first needed current of the first to-be-charged device 61 from the electrical signal, and the first DC/DC module 41 calculates the first needed power P_{nee/1} based on a product of the first needed voltage and the first needed current. For example, the first needed voltage is 500 volts, the first needed current is 40 amperes, and the first needed power P_{nee/1} is 20 kilowatts. In this case, the power scheduling module 30 determines that the first needed power P_{nee/1} transmitted by the first DC/DC module 41 is 20 kilowatts.
Optionally, when the first charging terminal 51 is connected to the first to-be-charged device 61, the first DC/DC module 41 receives an electrical signal of the first to-be-charged device 61 through the first charging terminal 51, and determines the first needed power P_{nee/1} from the electrical signal.

S200: The power scheduling module 30 determines total surplus power P_{AC/DC/TSur} transmitted by all AC/DC modules 10.

For example, total rated power of all the AC/DC modules 10 is 10 kilowatts, and transmitted power of all the AC/DC modules 10 is 8 kilowatts. In this case, the total surplus power P_{AC/DC/TSur} of all the AC/DC modules 10 is 2 kilowatts. Therefore, the power scheduling module 30 determines, based on electrical signals transmitted by all the AC/DC modules 10, that the total surplus power P_{AC/DC/TSur} is 2 kilowatts.

Optionally, when there is more than one AC/DC module 10, the power scheduling module 30 receives an electrical signal transmitted by each AC/DC module 10, and determines surplus power of each AC/DC module 10 from the electrical signal. The power scheduling module 30 determines the total surplus power P_{AC/DC/TSur} of all the AC/DC modules 10 based on the surplus power of each AC/DC module 10.

It may be understood that when the AC/DC module 10 does not transmit a current to the DC/DC module 40, transmitted power of the AC/DC module 10 is 0. When the AC/DC module 10 transmits a current to the DC/DC module 40, transmitted power is calculated based on a product of a value of a transmitted voltage and a value of a transmitted current.

S300: The power scheduling module 30 transmits first transmit power P_{tra/1} to the first DC/DC module 41 based on a value relationship between the first needed power P_{nee/1} and the total surplus power P_{AC/DC/TSur}. It may be understood that the power scheduling module 30 transmits an electrical signal to the first DC/DC module 41, so that the first DC/DC module 41 determines the first transmit power P_{tra/1} from the electrical signal. As shown in FIG. 5, when the first DC/DC module 41 receives the first transmit power P_{tra/1}, the AC/DC module 10 starts to charge the first to-be-charged device 61. FIG. 5 shows output currents of all the AC/DC modules 10 to the first DC/DC module 41. In another implementation, currents may alternatively be output to the first DC/DC module 41 by using some AC/DC modules 10. Specifically, this is flexibly set based on a condition.

In this embodiment, when the power scheduling module 30 transmits the first transmit power P_{tra/1} to the first DC/DC module 41 by using S100, S200, and S300, the first DC/DC module 41 charges the first to-be-charged device 61 based on the first transmit power P_{tra/1}. In this case, the first to-be-charged device 61 obtains charging power whose value is the first transmit power P_{tra/1}. It may be understood that, because the power scheduling module 30 can transmit the first transmit power P_{tra/1} based on the value relationship between the first needed power P_{nee/1} and the total surplus power P_{AC/DC/TSur}, a granularity of allocated power of the charging pile system 100 is relatively small.

For example, the power scheduling module 30 may control the DC/DC module to output any power such as 11 kilowatts, 13 kilowatts, or 33 kilowatts, and may even be accurate to a decimal point, for example, 11.1 kilowatts. In a conventional charging pile system, a manner of combining closing and disconnection of a plurality of switch components is used, so that a plurality of charging modules are connected in parallel and then configured for one charging terminal. In this case, a granularity of allocated power of the charging pile system is relatively large. For example, rated power of the AC/DC module 10 is 10 kilowatts. In this case, a power requirement that can be obtained by the to-be-charged device is power of a multiple of 10, such as 10 kilowatts, 20 kilowatts, or 30 kilowatts.

In summary, compared with that a plurality of charging modules are connected in parallel and then configured for one charging terminal in the manner of combining closing and disconnection of the plurality of switch components, to charge a to-be-charged device, in this embodiment, the power scheduling module 30 can accurately control a value of output power of the first DC/DC module 41, to avoid a case in which another to-be-charged device 60 cannot be charged because too much power is allocated, and also to avoid a case in which a charging requirement of the to-be-charged device 60 cannot be met because too little power is allocated, so that utilization of the charging pile system 100 is improved.

In addition, when a corresponding quantity of charging terminals 50 need to be added to the charging pile system 100, a plurality of switch components need to be additionally added to the conventional charging pile system, so that the plurality of charging modules are connected in parallel and then configured for the newly added charging terminal in the manner of combining closing and disconnection of the plurality of switch components. In this case, the conventional charging pile system significantly increases investment costs, and also significantly improves structural complexity of a charging pile. In this embodiment, in the charging pile system 100 that has the method for managing the charging pile system 100, the newly added charging terminal 50 needs to be connected to the DC/DC module 40, and the DC/DC module 40 is communicatively connected to the power scheduling module 30. Therefore, the charging pile system 100 in this embodiment eliminates disposing of the plurality of switch components, and is relatively low in costs investment and is relatively simple in structure.

How to determine a specific value of the first transmit power P_{tra/1} by using the value relationship between the first needed power P_{nee/1} and the total surplus power P_{AC/DC/TSur} is specifically described below by using various embodiments.

In an embodiment, when the first needed power P_{nee/1} is less than or equal to the total surplus power P_{AC/DC/TSur}, the first transmit power P_{tra/1} is transmitted to the first DC/DC module 41 by using the power scheduling module 30, and the first transmit power P_{tra/1} is close to the first needed power P_{nee/1}. In this case, the DC/DC module 40 can accurately provide needed power for the first to-be-charged device 61, to better meet a charging requirement of the first to-be-charged device 61.

Specifically, when the first needed power P_{nee/1} is less than or equal to the total surplus power P_{AC/DC/TSur}, the power scheduling module 30 transmits the first transmit power P_{tra/1} to the first DC/DC module 41. A ratio of the first transmit power P_{tra/1} to the first needed power P_{nee/1} falls within a preset range. It may be understood that the preset range is a value range [a, b] that is prestored on the power scheduling module 30. Optionally, [0.9, 1.1] is all values from 0.9 to 1.1. When the power scheduling module 30 needs to use the preset range, the power scheduling module 30 may directly invoke the preset range.

In this embodiment, when the first needed power P_{nee/1} is less than or equal to the total surplus power P_{AC/DC/TSur}, the power scheduling module 30 can transmit the first transmit power P_{tra/1} to the first DC/DC module 41, and the first transmit power P_{tra/1} is close to the first needed power P_{nee/1}, to control the first DC/DC module 41 to output the first transmit power P_{tra/1} that meets the charging requirement of the first to-be-charged device 61. In this case, the first to-be-charged device 61 can obtain charging power whose value is the first needed power P_{nee/1}. Therefore, power that can be obtained by the first to-be-charged device 61 is close to needed power of the first to-be-charged device 61, so that usability of the charging pile system 100 can be significantly improved.

In an embodiment, when the first needed power P_{nee/1} is greater than the total surplus power P_{AC/DC/TSur}, the power scheduling module 30 transmits the first transmit power P_{tra/1} to the first DC/DC module 41 by using the following several policy implementations, to allocate power to the first to-be-charged device 61.
(1) First come, first served. When the first charging terminal 51 is connected to the first to-be-charged device 61, the power scheduling module 30 controls the DC/DC module 40 to output power whose value is the total surplus power P_{AC/DC/TSur}. In other words, after a charging requirement of the second to-be-charged device 62 is preferentially met, all surplus power of all AC/DC modules is transmitted to the first to-be-charged device 61, to better meet the charging requirement of the first to-be-charged device 61.
(2) Power is equally allocated in proportion. When the first charging terminal 51 is connected to the first to-be-charged device 61, the power scheduling module 30 allocates total rated power P_{Trat} to the first to-be-charged device 61 and the second to-be-charged device 62 in proportion, so that the charging requirement of the first to-be-charged device 61 can be better met when it is ensured that power allocated to each to-be-charged device 60 is relatively equitable.
(3) Power is allocated based on priorities. When the first charging terminal 51 is connected to the first to-be-charged device 61, the power scheduling module 30 determines a priority of the first to-be-charged device 61 and a priority of the second to-be-charged device 62, and transmits the first transmit power P_{tra/1} to the first DC/DC module based on a relationship between the priority of the first to-be-charged device 61 and the priority of the second to-be-charged device 62, to better meet a charging requirement of a to-be-charged device 60 of a higher priority.
(4) Power is allocated equally in proportion based on priorities. When the first charging terminal 51 is connected to the first to-be-charged device 61, the power scheduling module 30 determines a priority of the first to-be-charged device 61 and a priority of the second to-be-charged device 62. When the priority of the first to-be-charged device 61 is higher than a priority of one or more second to-be-charged devices 62, the power scheduling module 30 allocates allocatable power Pₐₗₗₒ to the first to-be-charged device 61 and a type-1 to-be-charged device 621 based on an output power ratio, to ensure that power is relatively equitably allocated to the first to-be-charged device 61 and the type-1 to-be-charged device 621. The allocatable power Pₐₗₗₒ is equal to a sum of the total surplus power and needed power of the type-1 to-be-charged device 621.

The following separately describes in detail the foregoing four policies used by the power scheduling module to transmit the first transmit power P_{tra/1} to the first DC/DC module 41, to allocate power to the first to-be-charged device 61.

In a first embodiment, first come, first served.

In this embodiment, after the charging requirement of the second to-be-charged device 62 is preferentially met, the surplus power of all the AC/DC modules is transmitted to the first to-be-charged device 61, to better meet the charging requirement of the first to-be-charged device 61. In addition, some technical content that is of the method for managing the charging pile system 100 in this embodiment and that is the same as the method for managing the charging pile system 100 in the foregoing embodiment is not described again.

Specifically, when the first needed power P_{nee/1} is greater than the total surplus power P_{AC/DC/TSur}, a ratio of the first transmit power P_{tra/1} to the total surplus power P_{AC/DC/TSur} falls within a preset range.

It may be understood that, when the first needed power P_{nee/1} is greater than the total surplus power P_{AC/DC/TSur}, the power scheduling module 30 controls the DC/DC module 40 to output the total surplus power P_{AC/DC/TSur} to the first to-be-charged device 61. In this case, the total surplus power P_{AC/DC/TSur} is closer to the charging requirement of the first to-be-charged device 61. This improves user experience of the charging pile system 100.

In a second embodiment, power is equally allocated in proportion.

In this embodiment, by using the following S400 and S410, when the first needed power P_{nee/1} is greater than the total surplus power P_{AC/DC/TSur}, the power scheduling module 30 allocates the total rated power P_{Trat} to the first to-be-charged device 61 and the second to-be-charged device 62 in proportion, so that both the first to-be-charged device 61 and the second to-be-charged device 62 can obtain a part of needed power, to equitably allocate power to each to-be-charged device 60.

Power concepts involved in this embodiment are described first.
(1) Second needed power P_{nee/2} is needed power of the second to-be-charged device 62.
(2) Rated power of the AC/DC module 10 is maximum power that can be transmitted by the AC/DC module 10 to the DC/DC module 40.
(3) The total rated power P_{Trat} is equal to total rated power of the AC/DC module 10. It may be understood that, when there is one AC/DC module 10, the total rated power P_{Trat} is equal to rated power of the AC/DC module 10, and when there is more than one AC/DC module 10, the total rated power P_{Trat} is equal to a sum of rated power of all AC/DC modules 10.
(4) Total needed power P_{Tnee} is equal to a sum of all second needed power P_{nee/2} and the first needed power P_{nee/1}.
(5) An output power ratio k₁ is equal to a ratio of the total rated power P_{Trat} to the total needed power P_{Tnee}.

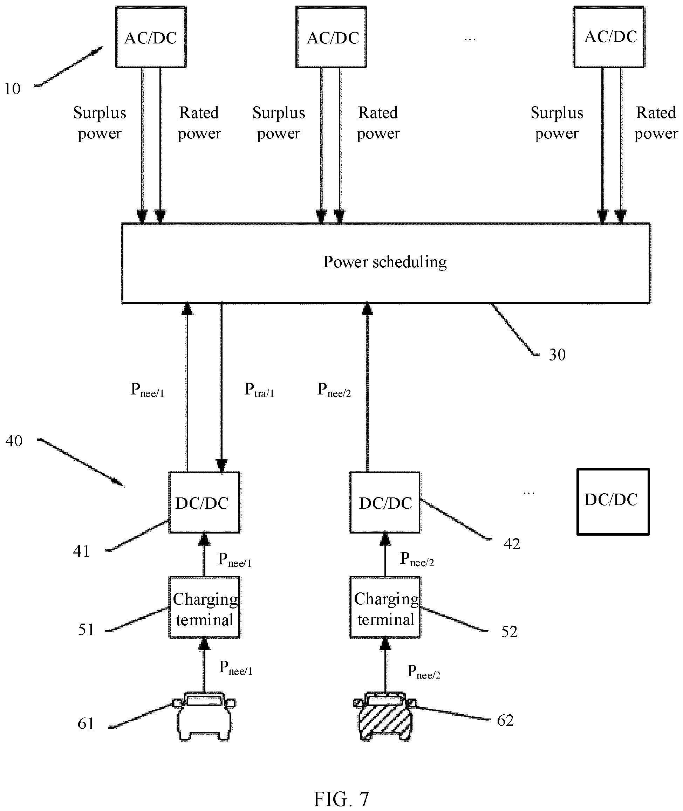

Refer to FIG. 6 and FIG. 7. FIG. 6 is a partial schematic flowchart of an implementation of a method for managing the charging pile system shown in FIG. 3. FIG. 7 is a schematic diagram of a signal transmission path in the method for managing the charging pile system 100 shown in FIG. 6. The method for managing the charging pile system 100 further includes but is not limited to S400 and S410. In addition, S400 and S410 may be exchanged. S400 and S410 are optional steps after S100, S200, and S300. To avoid excessive repetition, FIG. 6 provides only S400 and S410. In addition, some technical content that is of the method for managing the charging pile system 100 in this embodiment and that is the same as the method for managing the charging pile system 100 in the foregoing embodiment is not described again. Specific descriptions of S400 and S410 are as follows:

S400: The power scheduling module 30 determines second needed power P_{nee/2} transmitted by all second DC/DC modules 42 in the plurality of DC/DC modules 40.

It may be understood that, the power scheduling module 30 receives electrical signals transmitted by all the second DC/DC modules 42 in the plurality of DC/DC modules 40, and determines the second needed power P_{nee/2} from the electrical signals.

The second DC/DC module 42 determines the second needed power P_{nee/2} in a plurality of manners.

In an implementation, after receiving an electrical signal of the second to-be-charged device 62 through the second charging terminal 52, the second DC/DC module 42 determines a second needed voltage and a second needed current from the electrical signal. The second DC/DC module 42 calculates the second needed power P_{nee/2} based on the second needed voltage and the second needed current. The power scheduling module 30 receives the second needed power P_{nee/2} transmitted by the second DC/DC module 42.

In another implementation, the second DC/DC module 42 receives an electrical signal of the second to-be-charged device 62 through the second charging terminal 52, and directly determines the second needed power P_{nee/2} from the electrical signal.

Optionally, that the power scheduling module 30 determines second needed power P_{nee/2} includes:
the power scheduling module 30 presets a transmission period in which the second DC/DC module 42 transmits the second needed power P_{nee/2}. For example, the period is 10 minutes.

The power scheduling module 30 determines, based on the transmission period, the second needed power P_{nee/2} transmitted by the second DC/DC module 42. For example, the power scheduling module 30 determines, once every 10 minutes, the second needed power P_{nee/2} transmitted by the second DC/DC module 42. Therefore, the second needed power P_{nee/2} determined by the power scheduling module 30 is closer to power actually needed by the second to-be-charged device 62, to avoid a case in which power allocated by the AC/DC module 10 is greater than the power actually needed by the second to-be-charged device 62, so that the charging pile system 100 can accurately provide a power requirement for the second to-be-charged device 62.

S410: The power scheduling module 30 determines total rated power P_{Trat} transmitted by all AC/DC modules 10.

Optionally, when there is more than one AC/DC module 10, the power scheduling module 30 receives an electrical signal transmitted by each AC/DC module 10, and determines rated power of each AC/DC module 10 from the electrical signal. The power scheduling module 30 determines the total rated power P_{Trat} of all the AC/DC modules 10 based on the rated power of each AC/DC module 10.

In this case, a ratio of the first transmit power P_{tra/1} to first output power P_{put/1} falls within a preset range; where P_{put/1}=k₁×P_{nee/1}; and k₁=P_{Trat/}P_{Tnee}.

Optionally, the power scheduling module 30 calculates the total rated power P_{Trat} based on a sum of all the determined rated power, and calculates the total needed power P_{Tnee} based on a sum of the determined second needed power P_{nee/2} and the determined first needed power P_{nee/1}. In addition, the power scheduling module 30 calculates an output power ratio k₁ based on the calculated total rated power P_{Trat} and the calculated total needed power P_{Tnee}. Finally, the power scheduling module 30 calculates the first output power P_{put/1} based on the output power ratio k₁.

In this implementation, by using S400 and S410, when the first needed power P_{nee/1} is greater than the total surplus power P_{AC/DC/TSur}, the power scheduling module 30 controls the first DC/DC module 41 to output the first output power P_{put/1} to the first to-be-charged device 61, so that the first to-be-charged device 61 starts to be charged.

It may be understood that, in this implementation, the total rated power P_{Trat} is allocated to the first to-be-charged device 61 and the second to-be-charged device 62 in proportion. Therefore, the first output power P_{put/1} received by the first to-be-charged device 61 is not equal to 0, to ensure that the first to-be-charged device 61 can be "immediately charged after arriving". In other words, once the first to-be-charged device 61 is connected to the first charging terminal 51, the first DC/DC module 41 can charge the first to-be-charged device 61 by using the first charging terminal 51, to avoid a case in which a user gives up charging the first to-be-charged device 61 because the user needs to wait for excessively long charging time and consequently a user quantity of the charging pile system 100 is reduced.

In addition, because the power scheduling module 30 allocates the total rated power P_{Trat} to the first to-be-charged device 61 in proportion, the first to-be-charged device 61 can obtain the first output power P_{put/1} in a relatively equitable manner.

For example, when the total rated power P_{Trat} is 100 kilowatts, and the total needed power is 200 kilowatts, the output power ratio k₁ is 0.5. It is assumed that first needed power P_{nee/1} of the first to-be-charged device 61 is 20 kilowatts. In this case, power allocated to the first to-be-charged device 61 is 10 kilowatts. It may be understood that this allocation manner is relatively equitable, to be specific, when the total rated power P_{Trat} is not enough to be allocated, specific power can also be allocated to the first to-be-charged device 61, to be used for charging.

Because the total rated power P_{Trat} is allocated to the first to-be-charged device 61 in proportion in the foregoing embodiment, the total rated power P_{Trat} still has some surplus power. In this case, the surplus power is allocated to the second to-be-charged device 62 in the following S420, so that the second to-be-charged device 62 can obtain third transmit power P_{tra/3} in a relatively equitable manner.

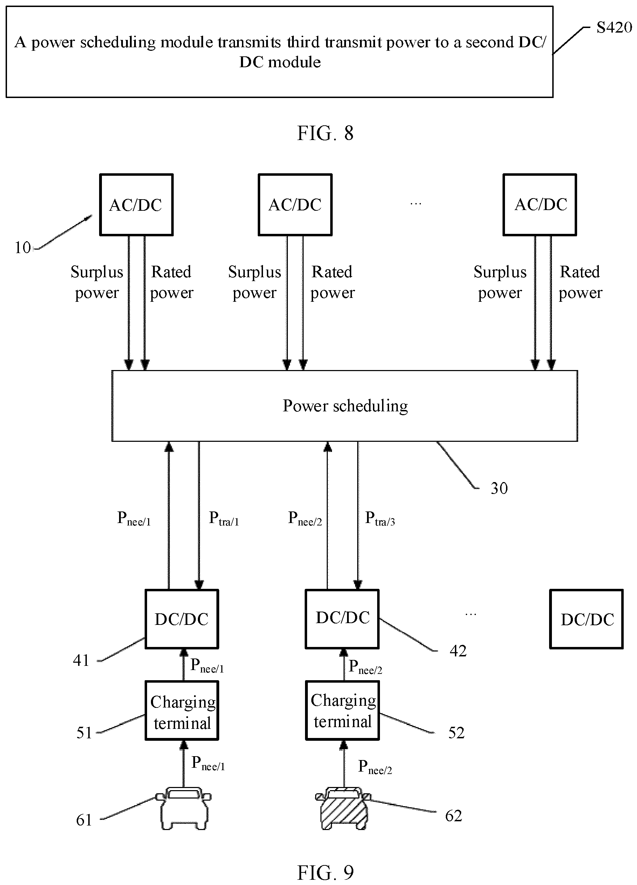

Refer to FIG. 8 and FIG. 9. FIG. 8 is a partial schematic flowchart of another implementation of a method for managing the charging pile system shown in FIG. 3. FIG. 9 is a schematic diagram of a signal transmission path in the method for managing the charging pile system 100 shown in FIG. 8. The method for managing the charging pile system 100 further includes but is not limited to S420. S420 is an optional step after S400 and S410. To avoid excessive repetition, FIG. 8 provides only S420. In addition, some technical content that is of the method for managing the charging pile system 100 in this embodiment and that is the same as the method for managing the charging pile system 100 in the foregoing embodiment is not described again. Specific descriptions of S420 are as follows:

S420: The power scheduling module 30 transmits third transmit power P_{tra/3} to the second DC/DC module 42, so that the second DC/DC module 42 charges the second to-be-charged device 62 based on the third transmit power P_{tra/3} by using the second charging terminal 52. A ratio of the third transmit power P_{tra/3} to second output power P_{put/2} falls within a preset range, where P_{put/2}=k₁×P_{nee/2}.

Optionally, the power scheduling module 30 calculates the third transmit power P_{tra/3} based on an output power ratio k₁.

In this embodiment, by using S420, when the first needed power P_{nee/1} is greater than the total surplus power P_{AC/DC/TSur}, the power scheduling module 30 transmits the third transmit power P_{tra/3} to the second DC/DC module 42, to control the second DC/DC module 42 to output the third transmit power P_{tra/3} that meets a charging requirement of the second to-be-charged device 62. In this case, the second to-be-charged device 62 can obtain charging power whose value is the third transmit power P_{tra/3}. Therefore, the first to-be-charged device 61 can obtain more accurate needed power, so that usability of the charging pile system 100 can be significantly improved.

In addition, because the power scheduling module 30 allocates the total rated power P_{Trat} to the second to-be-charged device 62 in proportion, the second to-be-charged device 62 can obtain the third transmit power P_{tra/3} in a relatively equitable manner.

For example, when the total rated power P_{Trat} is 100 kilowatts, and the total needed power is 200 kilowatts, the output power ratio k₁ is 0.5. It is assumed that second needed power P_{nee/2} of one second to-be-charged device 62 is 4 kilowatts. In this case, power allocated to the second to-be-charged device 62 is 2 kilowatts. It may be understood that this allocation manner is relatively equitable, to be specific, when the total rated power P_{Trat} is not enough to be allocated, specific power can also be allocated to the second to-be-charged device 62, to be used for charging.

In a third embodiment, power is allocated based on priorities.

In this implementation, by using S500 and S510, when the first needed power P_{nee/1} is greater than the total surplus power P_{AC/DC/TSur}, the power scheduling module 30 transmits the first transmit power P_{tra/1} to the first DC/DC module based on a relationship between a priority of the first to-be-charged device 61 and a priority of the second to-be-charged device 62, to better meet a charging requirement of a to-be-charged device 60 of a higher priority.

Power concepts involved in this implementation are described first.
(1) A priority is an agreement. A device of a higher priority is processed before a device of a lower priority. In other words, when a priority of a to-be-charged device 60 is high, the to-be-charged device 60 can be preferentially charged.
(2) A type-1 to-be-charged device 621 is a second to-be-charged device 62 whose priority is lower than the priority of the first to-be-charged device 61.
(3) Third needed power P_{nee/3} is needed power of the type-1 to-be-charged device 621.
(4) Allocatable power Pₐₗₗₒ is equal to a sum of the total surplus power P_{AC/DC/TSur} and third needed power P_{nee/3} of all type-1 to-be-charged devices 621.

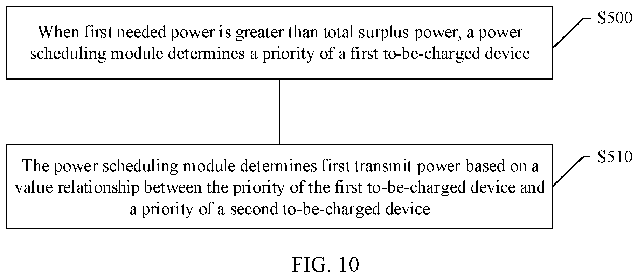

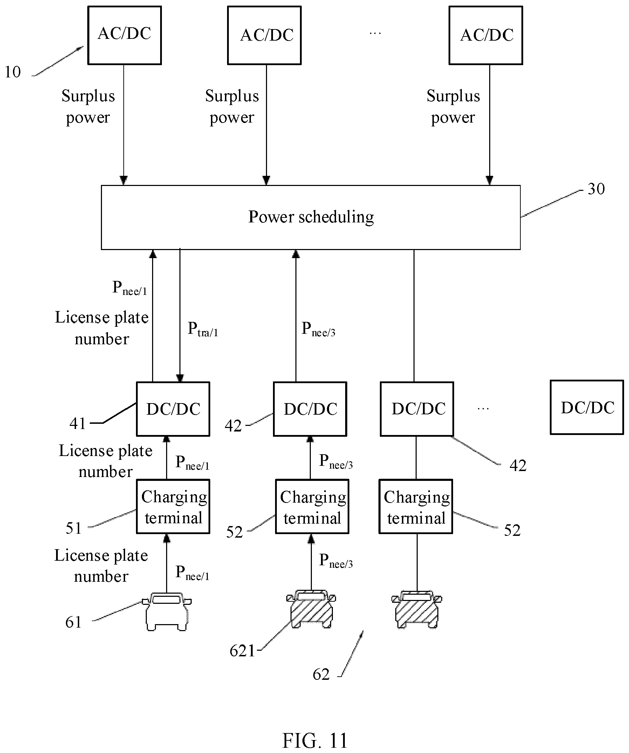

Refer to FIG. 10 and FIG. 11. FIG. 10 is a partial schematic flowchart of still another implementation of a method for managing the charging pile system shown in FIG. 3. FIG. 11 is a schematic diagram of a signal transmission path in the method for managing the charging pile system 100 shown in FIG. 10. The method for managing the charging pile system 100 further includes but is not limited to S500 and S510. S500 and S510 are optional steps after S100, S200, and S300. To avoid excessive repetition, FIG. 10 provides only S500 and S510. In addition, some technical content that is of the method for managing the charging pile system 100 in this embodiment and that is the same as the methods for managing the charging pile system 100 in all the foregoing embodiments is not described again. Specific descriptions of S500 and S510 are as follows:

S500: When the first needed power P_{nee/1} is greater than the total surplus power P_{AC/DC/TSur}, the power scheduling module 30 determines a priority of the first to-be-charged device 61.

Optionally, when the first charging terminal 51 in the plurality of charging terminals 50 is connected to the first to-be-charged device 61, the power scheduling module 30 receives identification information sent by the first to-be-charged device 61. The identification information may include but is not limited to a license plate number, an identity card number of a user, or a name of the user, and may even be a recognizable photo of the user.

The power scheduling module 30 invokes a prestored priority database, and determines the priority of the first to-be-charged device 61 from the priority database based on the identification information.

Optionally, a priority of a to-be-charged device 60 has different levels in different time periods. For example, in an earlier period in which the charging pile system 100 is just put into use, priorities of different to-be-charged devices 60 may be distinguished based on a quantity of use times, to be specific, a higher quantity of use times leads to a higher priority. In this case, when the priorities of different to-be-charged devices 60 are distinguished based on the quantity of use times, the user can be effectively motivated to charge the to-be-charged devices 60 by using the charging pile system 100, to increase a quantity of charging times, thereby effectively popularizing use of the charging pile system 100 to increase a quantity of to-be-charged devices 60 that use the charging pile system 100. During a medium term of use of the charging pile system 100, when the charging pile system 100 fails to meet a charging requirement of the to-be-charged device 60, the priorities of different to-be-charged devices 60 may be distinguished based on an investment contribution of the charging pile system 100 or a credit score during use. Certainly, in another embodiment, the priority may alternatively be set in another manner. This application sets no specific limitation.

S510: The power scheduling module 30 determines the first transmit power P_{tra/1} based on a value relationship between the priority of the first to-be-charged device 61 and a priority of the second to-be-charged device 62.

In this implementation, by using S500 and S510, a to-be-charged device 60 of a higher priority can be preferentially charged, to better meet a charging requirement of the to-be-charged device 60 of the higher priority.

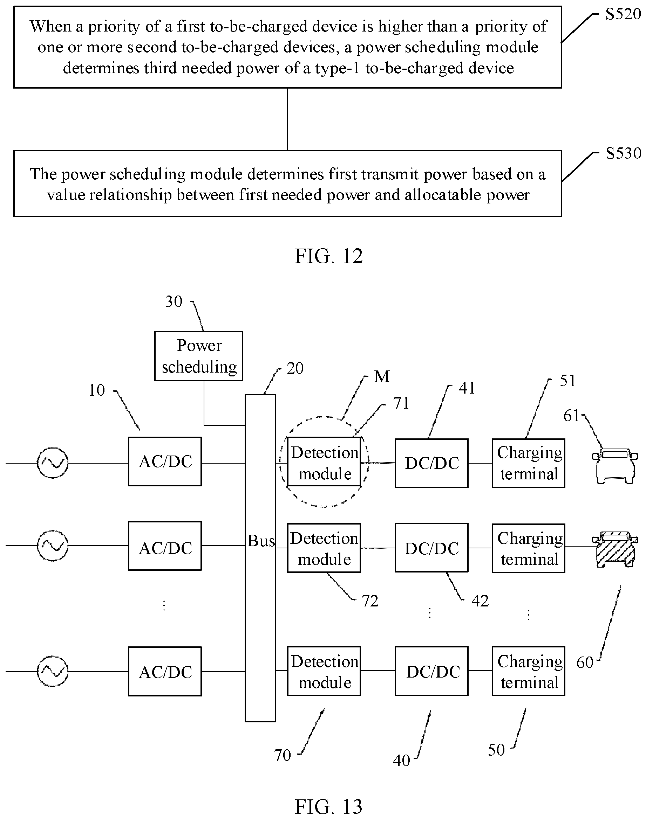

Further, FIG. 12 is a partial schematic flowchart of still another implementation of a method for managing the charging pile system shown in FIG. 3. The method for managing the charging pile system 100 further includes but is not limited to S520 and S530. S520 and S530 are optional steps in S500 and S510. To avoid excessive repetition, FIG. 11 provides only S520 and S530. In addition, some technical content that is of the method for managing the charging pile system 100 in this embodiment and that is the same as the method for managing the charging pile system 100 in the foregoing embodiment is not described again. Specific descriptions of S520 and S530 are as follows:

S520: When the priority of the first to-be-charged device 61 is higher than a priority of one or more second to-be-charged devices 62, the power scheduling module 30 determines third needed power P_{nee/3} of a type-1 to-be-charged device 621.

Optionally, before the power scheduling module 30 determines that the priority of the first to-be-charged device 61 is higher than the priority of the one or more second to-be-charged devices 62, the method may further include the following:

The power scheduling module 30 determines priorities of all second to-be-charged devices 62. Specifically, the power scheduling module 30 invokes a prestored priority database, and determines the priorities of the second to-be-charged devices 62 from the priority database based on identification information of the second to-be-charged devices 62.

The power scheduling module 30 sorts the priorities of the first to-be-charged device 61 and all the second to-be-charged devices 62. For example, the first to-be-charged device 61 or the second to-be-charged device 62 of a high priority is ranked first. A to-be-charged device of a low priority is deduced by analogy.

Optionally, before the power scheduling module 30 determines that the priority of the first to-be-charged device 61 is higher than the priority of the one or more second to-be-charged devices 62, the method may alternatively further include the following:

The power scheduling module 30 invokes a ranking sequence of the priorities of all the second to-be-charged devices 62. Specifically, when each second to-be-charged device 62 is connected to the second charging terminal 52, the power scheduling module 30 immediately sorts, based on a prestored priority database, a priority of a newly connected second to-be-charged device 62 and a priority of a second to-be-charged device 62 that is being charged, to form the sorting sequence. In this case, when the first to-be-charged device 61 is connected to the first charging terminal 51, the power scheduling module 30 needs to invoke only the sorting sequence of the priorities of the second to-be-charged devices 62.

The power scheduling module 30 determines a position of the priority of the first to-be-charged device 61 in the sorting sequence of the priorities of the second to-be-charged devices 62. Optionally, the power scheduling module 30 places the priority of the first to-be-charged device 61 in the sorting sequence of the priorities of the second to-be-charged devices 62 through "bubble sort". For example, the priority of the first to-be-charged device 61 is first compared with a lowest level in the sorting sequence. When the priority of the first to-be-charged device 61 is higher than the lowest level, the priority of the first to-be-charged device 61 is then compared with a second lowest level in the sorting sequence. When the priority of the first to-be-charged device 61 is lower than the second lowest level, the priority of the first to-be-charged device 61 is placed between the lowest level and the second lowest level.

Optionally, the power scheduling module 30 presets a transmission period in which the third needed power P_{nee/3} is transmitted to the type-1 to-be-charged device 621. For example, the transmission period is 10 minutes.

The power scheduling module 30 determines, based on the transmission period, the third needed power P_{nee/3} transmitted by the second DC/DC module 42. For example, the power scheduling module 30 determines, once every 10 minutes, the third needed power P_{nee/3} transmitted by the second DC/DC module 42. It may be understood that the third needed power P_{nee/3} changes after the type-1 to-be-charged device 621 has been charged for a period of time. Therefore, the third needed power P_{nee/3} transmitted by the second DC/DC module 42 is determined once every 10 minutes by using the power scheduling module 30, so that the third needed power P_{nee/3} determined by the power scheduling module 30 is closer to power actually needed by the type-1 to-be-charged device 621. In other words, power allocated by the AC/DC module 10 to the type-1 to-be-charged device 621 is avoided from being greater than the actually needed power.

S530: The power scheduling module 30 determines the first transmit power P_{tra/1} based on a value relationship between the first needed power P_{nee/1} and allocatable power Pₐₗₗₒ.

In this embodiment, because the priority of the first to-be-charged device 61 is higher than a priority of one or more second to-be-charged devices 62, a charging requirement of the first to-be-charged device 61 of a higher priority is better met based on the value relationship between the first needed power P_{nee/1} and the allocatable power Pₐₗₗₒ.

In an implementation, when the first needed power P_{nee/1} is greater than or equal to the allocatable power Pₐₗₗₒ, a ratio of the first transmit power P_{tra/1} to the allocatable power Pₐₗₗₒ falls within a preset range.

Optionally, the power scheduling module 30 calculates the allocatable power Pₐₗₗₒ based on a sum of the total surplus power P_{AC/DC/TSur} and third needed power P_{nee/3} of all type-1 to-be-charged devices 621.

In this implementation, because the first needed power P_{nee/1} is greater than or equal to the allocatable power Pₐₗₗₒ, the allocatable power Pₐₗₗₒ cannot meet or exactly meets the charging requirement of the first to-be-charged device 61. In this case, the first transmit power P_{tra/1} transmitted to the first DC/DC module 41 by using the power scheduling module 30 is close to the allocatable power Pₐₗₗₒ, so that the charging requirement of the first to-be-charged device 61 can be better met. This ensures that charging of the first to-be-charged device 61 can be more quickly completed.

In addition, because the allocatable power Pₐₗₗₒ cannot be equal to 0, the first transmit power P_{tra/1} cannot be equal to 0. In this case, the first to-be-charged device 61 can be "immediately charged after arriving". In other words, once the first to-be-charged device 61 is connected to the first charging terminal 51, the first DC/DC module 41 can charge the first to-be-charged device 61 by using the first charging terminal 51, to avoid a case in which a user gives up charging the first to-be-charged device 61 because the user needs to wait for excessively long charging time and consequently a user quantity of the charging pile system 100 is reduced.

It may be understood that, because the priority of the first to-be-charged device 61 is higher than a priority of the type-1 to-be-charged device 621, in the method in this embodiment, the third needed power P_{nee/3} allocated to all the type-1 to-be-charged devices 621 is reallocated to the first to-be-charged device 61 of a higher priority, to better meet the charging requirement of the first to-be-charged device 61 of the higher priority. This facilitates development of a to-be-charged device 60 of a relatively low priority toward a higher priority.

In the foregoing power allocation process, the first transmit power P_{tra/1} obtained by the first to-be-charged device 61 is close to the allocatable power Pₐₗₗₒ. Therefore, a part of power obtained by the first to-be-charged device 61 comes from power that has been allocated to the type-1 to-be-charged device 621. In this case, in the following method, the power scheduling module 30 controls the second DC/DC module 42 to transmit fourth transmit power P_{tra/4} to the type-1 to-be-charged device 621.

Specifically, the power scheduling module 30 transmits the fourth transmit power P_{tra/4} to a second DC/DC module 42 corresponding to the type-1 to-be-charged device 621. The fourth transmit power P_{tra/4} is equal to 0. It may be understood that because the fourth transmit power P_{tra/4} is equal to 0, the second charging terminal 52 stops charging the type-1 to-be-charged device 621. In this case, by using the foregoing method, the type-1 to-be-charged device 621 can develop towards a higher priority.

It may be understood that, that the power scheduling module 30 transmits the first transmit power P_{tra/1} to the first DC/DC module 41 when the first needed power P_{nee/1} is greater than or equal to the allocatable power Pₐₗₗₒ is provided above. That the power scheduling module 30 transmits the first transmit power P_{tra/1} to the first DC/DC module 41 by using the following policy when the first needed power P_{nee/1} is less than the allocatable power Pₐₗₗₒ is provided below.

Specifically, when the first needed power P_{nee/1} is less than the allocatable power Pₐₗₗₒ, a ratio of the first transmit power P_{tra/1} to the first needed power P_{nee/1} falls within a preset range. In this case, the first DC/DC module 41 charges the first to-be-charged device 61 based on the first transmit power P_{tra/1} by using the first charging terminal 51, so that the first to-be-charged device 61 starts to be charged.

In addition, because the first needed power P_{nee/1} is less than the allocatable power Pₐₗₗₒ, the allocatable power Pₐₗₗₒ can meet the charging requirement of the first to-be-charged device 61. In this case, the first transmit power P_{tra/1} transmitted by using the power scheduling module 30 is close to the first needed power P_{nee/1}. In this case, the first DC/DC module 41 can accurately provide needed power for the first to-be-charged device 61, to better meet the charging requirement of the first to-be-charged device 61.

In the foregoing power allocation process, second transmit power P_{tra/2} obtained by the first to-be-charged device 61 is close to the first needed power P_{nee/1}, and the first needed power P_{nee/1} is less than the allocatable power Pₐₗₗ. Therefore, a part of power obtained by the first to-be-charged device 61 comes from power that has been allocated to the type-1 to-be-charged device 621. In this case, power is allocated to the type-1 to-be-charged device 621 by using the following method.

In this implementation, by using the following method, the power scheduling module 30 can reallocate a part of the allocatable power Pₐₗₗₒ to a type-1 to-be-charged device 621 of a higher priority, so that a charging requirement of the type-1 to-be-charged device 621 of the higher priority is met to a relatively large extent.

Power concepts involved in this implementation are described first.
(1) i is an integer greater than or equal to 1.
(2) A to-be-charged device 60 whose priority is i is an i^{th} to-be-charged device 60 that is preferentially charged. Therefore, a smaller value of i indicates a higher priority. For example, a priority of a to-be-charged device whose priority is 1 is the highest.
(3) (i+1)^{th} power Pᵢ₊₁ is equal to a sum of the total surplus power P_{AC/DC/TSur} and third needed power P_{nee/3} of all type-1 to-be-charged devices whose priorities are lower than or equal to i+1.
(4) i^{th} power Pᵢ is equal to a sum of the total surplus power P_{AC/DC/TSur} and third needed power P_{nee/3} of all type-1 to-be-charged devices 621 whose priorities are lower than or equal to i.
(5) i^{th} surplus power P_{Sur/i} is equal to a difference between the i^{th} power Pᵢ and the first needed power P_{nee/1}.

When the first needed power P_{nee/1} is greater than the (i+1)^{th} power Pᵢ₊₁ and is less than or equal to the i^{th} power Pᵢ, the power scheduling module 30 transmits first output power P_{put/1} to a second DC/DC module 42 corresponding to a type-1 to-be-charged device 621 whose priority is i, so that the second DC/DC module 42 charges, based on the first output power P_{put/1} by using the second charging terminal 52, the type-1 to-be-charged device 621 whose priority is i. A ratio of the first output power P_{put/1} to the i^{th} surplus power P_{Sur/i} falls within a preset range.

It may be understood that because the first needed power P_{nee/1} is less than the i^{th} power Pᵢ, and the allocatable power Pₐₗₗₒ is equal to the sum of the total surplus power P_{AC/DC/TSur} and third needed power P_{nee/3} of all type-1 to-be-charged devices 621, the first needed power P_{nee/1} is also obviously less than the allocatable power Pₐₗₗₒ.

The power scheduling module 30 transmits fifth transmit power P_{tra/5} to second DC/DC modules 42 corresponding to all type-1 to-be-charged devices 621 whose priorities are lower than i, and the fifth transmit power P_{tra/5} is 0. In this case, the second charging terminal 52 stops charging all the type-1 to-be-charged devices 621 whose priorities are lower than i; where P_{Sur/i}=Pᵢ-P_{nee/1}.

In other words, the i^{th} surplus power P_{Sur/i} is equal to a difference between the i^{th} power Pᵢ and the first needed power P_{nee/1}.

For example, a quantity of type-1 to-be-charged devices is 3, and i is equal to 2. In this case, second power P₂ is equal to a sum of the total surplus power P_{AC/DC/TSur}, third needed power P_{nee/3} of a type-1 to-be-charged device 621 whose priority is 3, and third needed power P_{nee/3} of a type-1 to-be-charged device 621 whose priority is 2. Third power P₃ is equal to a sum of the total surplus power P_{AC/DC/TSur} and the third needed power P_{nee/3} of the type-1 to-be-charged device 621 whose priority is 3.

When the first needed power P_{nee/1} is greater than the third power P₃ and is less than or equal to the second power P₂, the power scheduling module 30 transmits the first output power P_{put/1} to a second DC/DC module 42 corresponding to the type-1 to-be-charged device 621 whose priority is 2, so that the second DC/DC module 42 charges, based on the first output power P_{put/1} by using the second charging terminal 52, the type-1 to-be-charged device 621 whose priority is 2. The power scheduling module 30 stops charging the to-be-charged device 621 whose priority is 3.

It may be understood that, because the first needed power P_{nee/1} is greater than the third power P₃, the sum of the total surplus power P_{AC/DC/TSur} and the third needed power P_{nee/3} of the type-1 to-be-charged device 621 whose priority is 3 cannot meet the charging requirement of the first to-be-charged device 61. In this case, the third needed power P_{nee/3} that has been allocated to the type-1 to-be-charged device 621 whose priority is 3 is reallocated to the first to-be-charged device 61. In addition, because the first needed power P_{nee/1} is less than or equal to the second power P₂, a part of third needed power P_{nee/3} that has been allocated to the type-1 to-be-charged device 621 whose priority is 2 is reallocated to the first to-be-charged device 61, to meet the charging requirement of the first to-be-charged device 61 to a relatively large extent.

Optionally, the power scheduling module 30 calculates the i^{th} power P; based on a sum of the total surplus power P_{AC/DC/TSur} and third needed power P_{nee/3} of all type-1 to-be-charged devices 621 whose priorities are lower than or equal to i.

The power scheduling module 30 calculates the (i+1)^{th} power Pᵢ₊₁ based on a sum of the total surplus power P_{AC/DC/TSur} and third needed power P_{nee/3} of all type-1 to-be-charged devices whose priorities are lower than or equal to i+1.

The power scheduling module 30 calculates the i^{th} surplus power P_{Sur/i} based on a difference between the i^{th} power Pᵢ and the first needed power P_{nee/1}.

In this implementation, because the power scheduling module 30 reallocates, to the first to-be-charged device 61 of a higher priority, a part of power allocated to the type-1 to-be-charged device 621, the power allocated to the type-1 to-be-charged device 621 still has another surplus part. In this case, the power scheduling module 30 allocates the another surplus part of power to a second to-be-charged device 62 of a highest priority in the type-1 to-be-charged device 621, so that charging of a type-1 to-be-charged device 621 of a higher priority can be quickly completed, to meet a charging requirement of a to-be-charged device 60 of a higher priority to a relatively large extent.

All the foregoing allocation manners are power allocation manners for transmitting power to the first DC/DC module 41 when the priority of the first to-be-charged device 61 is higher than the priority of the one or more second to-be-charged devices 62. A power allocation manner used when the priority of the first to-be-charged device 61 is lower than or equal to a priority of any second to-be-charged device 62 is provided below.

In an implementation, when the priority of the first to-be-charged device 61 is lower than or equal to the priority of any second to-be-charged device 62, power transmitted by the power scheduling module 30 to the first DC/DC module 41 is 0. In this case, the first DC/DC module 41 does not charge the first to-be-charged device 61. Therefore, in this method, the first to-be-charged device 61 of a relatively low priority can be motivated to develop towards to a higher priority.

In a fourth embodiment, power is allocated equally in proportion based on priorities.

In this embodiment, the allocatable power Pₐₗₗₒ is allocated to the first to-be-charged device 61 and the type-1 to-be-charged device 621 based on an output power ratio, so that power can be allocated to both the first to-be-charged device 61 and the type-1 to-be-charged device 621, thereby ensuring equitable power allocation.

Power concepts involved in this implementation are described first.
(1) Allocatable power Pₐₗₗₒ is equal to a sum of the total surplus power P_{AC/DC/TSur} and fourth needed power P_{nee/4} of all type-1 to-be-charged devices 621.
(2) Total needed power P_{Tnee} is equal to a sum of the first needed power P_{nee/1} and the allocatable power Pₐₗₗₒ.
(3) An output power ratio k₂ is equal to a ratio of the allocatable power Pₐₗₗₒ to the total needed power P_{Tnee}.
(4) First output power P_{put/1} is equal to a product of the output power ratio k₂ and the first needed power P_{nee/1}.

In this embodiment, technical content that is the same as that in the third embodiment is not described again. For example, this embodiment also includes steps such as S500, S510, S520, and S530. Different technical content is specifically described below in detail.

Specifically, when the first needed power P_{nee/1} is greater than or equal to the allocatable power Pₐₗₗₒ, a ratio of the first transmit power P_{tra/1} to third output power P_{put/3} falls within a preset range, where P_{put/3}=k₂×P_{nee/1}; k₂=Pₐₗₗₒ/P_{Tnee}; and P_{Tnee}=Pₐₗₗₒ+P_{nee/1}; where k₂ is the output power ratio, and P_{Tnee} is the total needed power.

It may be understood that the first DC/DC module 41 charges the first to-be-charged device 61 based on the first transmit power P_{tra/1} by using the first charging terminal 51.

In this embodiment, because the allocatable power Pₐₗₗₒ cannot be 0, the first output power P_{put/1} cannot be 0. In this case, the first to-be-charged device 61 can be "immediately charged after arriving". In other words, once the first to-be-charged device 61 is connected to the first charging terminal 51, the first DC/DC module 41 can charge the first to-be-charged device 61 by using the first charging terminal 51, to avoid a case in which a user gives up charging the first to-be-charged device 61 because the user needs to wait for excessively long charging time and consequently a user quantity of the charging pile system 100 is reduced.

In addition, because the priority of the first to-be-charged device 61 is higher than a priority of one or more second to-be-charged devices 62, the first to-be-charged device 61 of a higher priority can also be preferentially charged by using the foregoing method.

In addition, because in the method in this implementation, the allocatable power Pₐₗₗₒ is allocated to the first to-be-charged device 61 based on the output power ratio k₂, power allocated to the first to-be-charged device 61 is also relatively equitable. It may be understood that, when the allocatable power Pₐₗₗₒ is not enough to be allocated, specific power can also be allocated to the first to-be-charged device 61, to be used for charging.

Because the allocatable power Pₐₗₗₒ is allocated to the first to-be-charged device 61 in proportion in the foregoing embodiment, the allocatable power Pₐₗₗₒ still has some surplus power. In this case, the surplus power is allocated to the type-1 to-be-charged device 621 by using the following method, so that the type-1 to-be-charged device 621 can obtain sixth transmit power in a relatively equitable manner.

In this implementation, the power scheduling module 30 transmits sixth transmit power P_{tra/6} to a second DC/DC module 42 corresponding to the type-1 to-be-charged device 621, where a ratio of the sixth transmit power P_{tra/6} to fourth output power P_{put/4} falls within a preset range; where P_{put/4}=k₂×P_{nee/3}.

Optionally, the power scheduling module 30 calculates the fourth output power P_{put/4} based on a product of the output power ratio k₂ and the third needed power P_{nee/3}.

In addition, because in the method in this embodiment, the allocatable power Pₐₗₗₒ is allocated to the first to-be-charged device 61 and the type-1 to-be-charged device 621 based on the output power ratio k₂, to relatively equitably allocate power to the first to-be-charged device 61 and the type-1 to-be-charged device 621. In other words, a case in which use experience of the user is affected because some to-be-charged devices 60 are not charged and some to-be-charged devices 60 are being charged due to a power allocation imbalance.

In addition, although the priority of the first to-be-charged device 61 is higher than the priority of the one or more second to-be-charged devices 62, the first to-be-charged device 61 is connected to the charging terminal 50 later than the type-1 to-be-charged device 621. Therefore, the allocatable power Pₐₗₗₒ is allocated to the first to-be-charged device 61 and the type-1 to-be-charged device 621 based on the output power ratio k₂, so that it is ensured that the first to-be-charged device 61 of the higher priority can be preferentially charged, and the type-1 to-be-charged device can also continue to be charged.

All the foregoing allocation manners are power allocation manners in which the power scheduling module 30 allocates power to the first DC/DC module 41 when the priority of the first to-be-charged device 61 is higher than the priority of the one or more second to-be-charged devices 62. A power allocation manner used when the priority of the first to-be-charged device 61 is lower than or equal to a priority of any second to-be-charged device 62 is provided below.

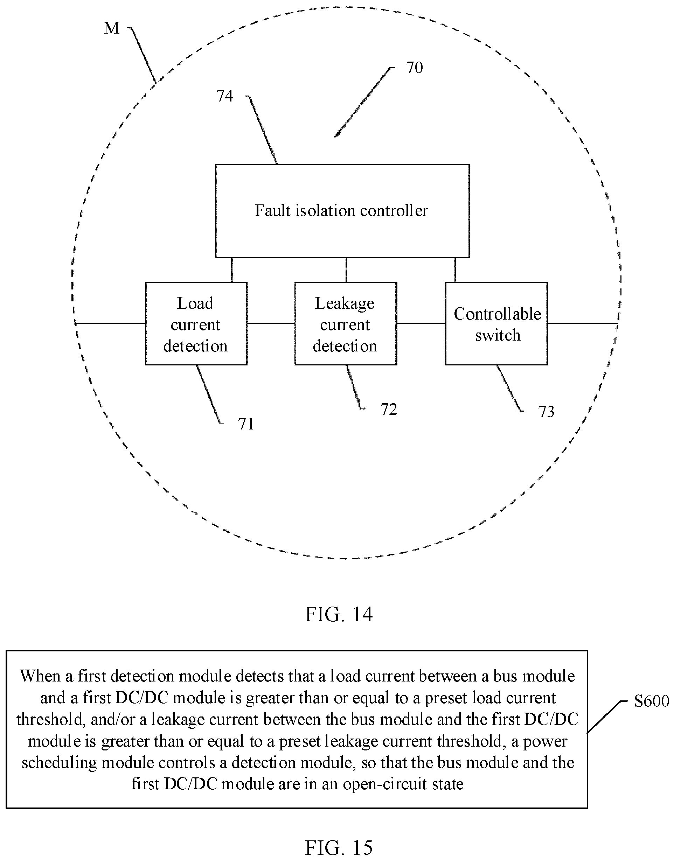

In some embodiments, the charging pile system 100 may further include a detection module 70. The detection module 70 is configured to detect whether a circuit fault occurs between the bus module 20 and the DC/DC module 40, so that when one charging circuit is faulty, the faulty charging circuit does not affect another charging circuit. In this embodiment, a structure of the charging pile system 100 in this embodiment and a function of the detection module 70 in the charging circuit are described by using FIG. 13 and FIG. 14.

FIG. 13 is a schematic structural diagram of a charging pile system 100 in still another implementation according to an embodiment of this application. The charging pile system 100 includes a plurality of detection modules 70. The plurality of detection modules 70 are connected between the bus module 20 and the plurality of DC/DC modules 40 in a one-to-one correspondence.

The detection module 70 is configured to detect whether a circuit fault occurs between the bus module 20 and the DC/DC module 40. When the circuit fault occurs between the bus module 20 and the DC/DC module 40, the power scheduling module 30 controls the detection module 70, so that the bus module 20 and the first DC/DC module 41 are in an open-circuit state. It may be understood that the detection module 70 connected between the bus module 20 and the first DC/DC module 41 is a first detection module 71. The first detection module 71 is configured to detect whether a circuit fault occurs between the bus module 20 and the first DC/DC module 41. A detection module 70 connected between the bus module 20 and the second DC/DC module 42 is a second detection module 72. The second detection module 72 is configured to detect whether a circuit fault occurs between the bus module 20 and the second DC/DC module 42.

FIG. 14 is a schematic structural diagram of the detection module 70 in the charging pile system 100 shown in FIG. 13. The detection module 70 includes a load current detection part 71, a leakage current detection part 72, and a controllable switch part 73. The load current detection part 71, the leakage current detection part 72, and the controllable switch part 73 are connected in series. Certainly, the load current detection part 71 may also be connected in parallel to the leakage current detection part 72, and then connected in series to the controllable switch part 73. It may be understood that the load current detection part 71 is configured to detect whether a load current between the bus module 20 and the DC/DC module 40 is greater than or equal to a preset load current threshold. The leakage current detection part 72 is configured to detect whether a leakage current between the bus module 20 and the DC/DC module 40 is greater than or equal to a preset leakage current threshold. The controllable switch part 73 is configured to disconnect a connection between the bus module 20 and the DC/DC module 40.

In another embodiment, the detection module 70 further includes a fault isolation controller 74. The fault isolation controller 74 is communicatively connected to the power scheduling module 30. The fault isolation controller 74 is sequentially connected to the load current detection part 71, the leakage current detection part 72, and the controllable switch part 73. The fault isolation controller 74 may control detection of the load current detection part 71 and the leakage current detection part 72 based on a signal of the power scheduling module 30, and may further control closing and disconnection of the controllable switch part 73. In another embodiment, the power scheduling module 30 may be integrated into the fault isolation controller 74.

In the following embodiments, a method for managing a charging pile system provided in an embodiment of this application is described based on the structures of the charging pile system shown in FIG. 13 and FIG. 14.

In an embodiment, by using the following S600, when a charging circuit of the first to-be-charged device 61 is faulty, the charging circuit of the first to-be-charged device 61 does not affect a charging circuit of the second to-be-charged device 62.

FIG. 15 is a schematic flowchart of a method for managing the charging pile system 100 shown in FIG. 13. The method for managing the charging pile system 100 further includes but is not limited to S600. S600 may be an optional step after any step in the methods for managing the charging pile system in the foregoing embodiments. To avoid excessive repetition, FIG. 15 provides only S600. In addition, some technical content that is of the method for managing the charging pile system 100 in this embodiment and that is the same as the method for managing the charging pile system 100 in the foregoing embodiment is not described again. Specific descriptions of S600 are as follows:

S600: When the first detection module 71 detects that a load current between the bus module 20 and the first DC/DC module 41 is greater than or equal to a preset load current threshold, and/or a leakage current between the bus module 20 and the first DC/DC module 41 is greater than or equal to a preset leakage current threshold, the power scheduling module 30 controls the first detection module 71, so that the bus module 20 and the first DC/DC module 41 are in an open-circuit state.

It may be understood that, that when the first detection module 71 detects that the load current between the bus module 20 and the first DC/DC module 41 is greater than or equal to the preset load current threshold or the leakage current between the bus module 20 and the first DC/DC module 41 is greater than or equal to the preset leakage current threshold means that when the load current between the bus module 20 and the first DC/DC module 41 is greater than or equal to the preset load current threshold and the leakage current between the bus module 20 and the first DC/DC module 41 is greater than or equal to the preset leakage current threshold, the power scheduling module 30 controls the first detection module 71, so that the bus module 20 and the first DC/DC module 41 are in an open-circuit state.

For example, the preset load current threshold is 50 amperes, and the preset leakage current threshold is 30 amperes. In this case, when the load current between the bus module 20 and the first DC/DC module 41 exceeds 50 amperes, or the leakage current exceeds 30 amperes, or the load current exceeds 50 amperes and the leakage current exceeds 30 amperes, the power scheduling module 30 controls the first detection module 71, so that the bus module 20 and the first DC/DC module 41 are in an open-circuit state.

Optionally, before the first detection module 71 detects that the load current between the bus module 20 and the first DC/DC module 41 is greater than or equal to the preset load current threshold, and/or the leakage current between the bus module 20 and the first DC/DC module 41 is greater than or equal to the preset leakage current threshold, the power detection module 70 prestores the preset load current threshold, or the power detection module 70 prestores the preset leakage current threshold. The load current threshold may be preset based on a bearing capacity of a conducting wire between the bus module 20 and the first DC/DC module 41.

In this embodiment, by using S600, in a process of charging the first to-be-charged device 61, a case in which the entire charging pile system 100 cannot run because a load current of a charging circuit of the first to-be-charged device 61 is greater than or equal to the preset load current threshold or a leakage current is greater than or equal to the preset leakage current threshold is avoided. In other words, when the charging circuit of the first to-be-charged device 61 is faulty, the charging circuit of the first to-be-charged device 61 does not affect a charging circuit of the second to-be-charged device 62.

This application further provides a charging pile system corresponding to the methods for managing the charging pile system in the foregoing embodiments. The power scheduling module in the charging pile system is configured to perform the methods for managing the charging pile system in the foregoing embodiments. For specific descriptions of the charging pile system, refer to the foregoing embodiments. Details are not described herein.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for managing a charging pile system, wherein the charging pile system comprises at least one AC/DC module (10), a bus module (20), a power scheduling module (30), a plurality of DC/DC modules (40), a plurality of charging terminals (50) that are connected to the plurality of DC/DC modules (40) in a one-to-one correspondence, and a plurality of detection modules (70), wherein the plurality of detection modules (70) are connected between the bus module (20) and the plurality of DC/DC modules (40) in a one-to-one correspondence, wherein an output end of the at least one AC/DC module (10) is connected to input ends of the plurality of DC/DC modules (40) by using the bus module, the power scheduling module (30) is connected to the bus module (20), and each charging terminal among the plurality of charging terminals is configured to charge a to-be-charged device based on transmit power determined by the corresponding DC/DC module; and
the method comprises:
• when a first charging terminal in the plurality of charging terminals (50) is connected to a first to-be-charged device, determining, by the power scheduling module (30), first needed power P_{nee/1} transmitted by a first DC/DC module correspondingly connected to the first charging terminal, wherein the first needed power P_{nee/1} is needed power of the first to-be-charged device;
• determining, by the power scheduling module (30), total surplus power P_{AC/DC/TSur} transmitted by the at least one AC/DC module (10), wherein the total surplus power P_{AC/DC/TSur} is a difference between total rated power of the at least one AC/DC module (10) and transmitted power; and
• transmitting, by the power scheduling module (30), first transmit power P_{tra/1} to the first DC/DC module, the first transmit power P_{tra/1} being based on a value relationship between the first needed power P_{nee/1} and the total surplus power P_{AC/DC/Tsur},
wherein the method further comprises:
• when a first detection module among the plurality of detection modules (70) detects that a load current between the bus module (20) and the first DC/DC module is greater than or equal to a preset load current threshold, and/or a leakage current between the bus module (20) and the first DC/DC module is greater than or equal to a preset leakage current threshold, controlling, by the power scheduling module (30), the first detection module, so that the bus module (20) and the first DC/DC module are in an open-circuit state, wherein the first detection module is connected between the bus module (20) and the first DC/DC module.

2. The method for managing the charging pile system according to claim 1, wherein when the first needed power P_{nee/1} is less than or equal to the total surplus power P_{AC/DC/TSur}, a ratio of the first transmit power P_{tra/1} to the first needed power P_{nee/1} falls within a first preset range; or when the first needed power P_{nee/1} is greater than the total surplus power P_{AC/DC/TSur}, a ratio of the first transmit power P_{tra/1} to the total surplus power P_{AC/DC/TSur} falls within a second preset range.

3. The method for managing the charging pile system according to claim 1, wherein when the first needed power P_{nee/1} is greater than the total surplus power P_{AC/DC/TSur}, a ratio of the first transmit power P_{tra/1} to first output power P_{put/1} falls within a third preset range; P_{put/1}=k₁×P_{nee/1}; and k₁=P_{Trat}/P_{Tnee}; wherein k₁ is an output power ratio, P_{Trat} is the total rated power of the at least one AC/DC module, P_{Tnee} is a sum of all second needed power P_{nee/2} and the first needed power P_{nee/1}, and the second needed power P_{nee/2} is needed power of a second to-be-charged device corresponding to a second DC/DC module, wherein a charging terminal connected to the second to-be-charged device in a charging state is a second charging terminal, and a DC/DC module corresponding to the second charging terminal in the plurality of charging terminals is the second DC/DC module; and
the method further comprises:
determining, by the power scheduling module, second needed power P_{nee/2} transmitted by all second DC/DC modules in the plurality of DC/DC modules; and
determining, by the power scheduling module, total rated power P_{Trat} transmitted by the at least one AC/DC modules.

4. The method for managing the charging pile system according to claim 3, wherein the method further comprises: transmitting, by the power scheduling module, third transmit power P_{tra/3} to the second DC/DC module, wherein a ratio of the third transmit power P_{tra/3} to second output power P_{put/2} falls within a preset range, and P_{put/2}=k₁×P_{nee/2}.

5. The method for managing the charging pile system according to claim 1, wherein the method further comprises:
when the first needed power P_{nee/1} is greater than the total surplus power P_{AC/DC/TSur}, determining, by the power scheduling module, a priority of the first to-be-charged device; and
determining, by the power scheduling module, the first transmit power P_{tra/1} based on a relationship between the priority of the first to-be-charged device and a priority of a second to-be-charged device, wherein a DC/DC module corresponding to a second charging terminal in the plurality of charging terminals is a second DC/DC module, and a charging terminal connected to the second to-be-charged device in a charging state is the second charging terminal.

6. The method for managing the charging pile system according to claim 5, wherein the method further comprises:
when the priority of the first to-be-charged device is higher than a priority of one or more second to-be-charged devices, determining, by the power scheduling module, third needed power P_{nee/3} of a type-1 to-be-charged device, wherein the type-1 to-be-charged device is a second to-be-charged device whose priority is lower than the priority of the first to-be-charged device; and
determining, by the power scheduling module, the first transmit power P_{tra/1} based on a value relationship between the first needed power P_{nee/1} and allocatable power Pₐₗₗₒ, wherein the allocatable power Pₐₗₗₒ is equal to a sum of the total surplus power P_{AC/DC/TSur} and third needed power P_{nee/3} of all type-1 to-be-charged devices.

7. The method for managing the charging pile system according to claim 6, wherein when the first needed power P_{nee/1} is greater than or equal to the allocatable power Pₐₗₗₒ, a ratio of the first transmit power P_{tra/1} to the allocatable power Pₐₗₗₒ falls within a forth preset range.

8. A charging pile system comprising at least one AC/DC module (10), a bus module (20), a power scheduling module (30), a plurality of DC/DC modules (40), a plurality of charging terminals (50) that are connected to the plurality of DC/DC modules (40) in a one-to-one correspondence, and a plurality of detection modules (70), wherein the plurality of detection modules (70) are connected between the bus module (20) and the plurality of DC/DC modules (40) in a one-to-one correspondence, wherein an output end of the at least one AC/DC module (10) is connected to input ends of the plurality of DC/DC modules (40) by using the bus module, the power scheduling module (30) is connected to the bus module (20), and each charging terminal among the plurality of charging terminals (50) is configured to charge a to-be-charged device based on transmit power determined by the corresponding DC/DC module, wherein the charging pile system is configured to perform any of the methods according to claims 1 - 7.

## Patentansprüche

1. Verfahren zum Verwalten eines Ladesäulensystems, wobei das Ladesäulensystem mindestens ein AC/DC-Modul (10), ein Busmodul (20), ein Leistungsplanungsmodul (30), eine Vielzahl von DC/DC-Modulen (40), eine Vielzahl von Ladeterminals (50), die mit der Vielzahl von DC/DC-Modulen (40) in einer Eins-zu-Eins-Entsprechung verbunden sind, und eine Vielzahl von Erfassungsmodulen (70) umfasst, wobei die Vielzahl von Erfassungsmodulen (70) zwischen dem Busmodul (20) und der Vielzahl von DC/DC-Modulen (40) in einer Eins-zu-Eins-Entsprechung verbunden sind, wobei ein Ausgangsende des mindestens einen AC/DC-Moduls (10) mit Eingangsenden der Vielzahl von DC/DC-Modulen (40) durch Verwenden des Busmoduls verbunden ist, das Leistungsplanungsmodul (30) mit dem Busmodul (20) verbunden ist und jeder Ladeterminal unter der Vielzahl von Ladeterminals konfiguriert ist, um eine zu ladende Vorrichtung basierend auf einer Sendeleistung, die durch das entsprechende DC/DC-Modul bestimmt wird, zu laden; und
das Verfahren umfasst:
• wenn ein erster Ladeterminal in der Vielzahl von Ladeterminals (50) mit einer ersten zu ladenden Vorrichtung verbunden ist, Bestimmen, durch das Leistungsplanungsmodul (30), einer ersten benötigten Leistung P_{ben/1}, die durch ein erstes DC/DC-Modul, das mit dem ersten Ladeterminal entsprechend verbunden ist, gesendet wird, wobei die erste benötigte Leistung P_{ben/1} eine benötigte Leistung der ersten zu ladenden Vorrichtung ist;
• Bestimmen, durch das Leistungsplanungsmodul (30), einer Gesamtüberschussleistung P_{AC/DC/GÜber}, die durch das mindestens eine AC/DC-Modul (10) gesendet wird, wobei die Gesamtüberschussleistung P_{AC/DC/GÜber} eine Differenz zwischen einer Gesamtnennleistung des mindestens einen AC/DC-Moduls (10) und einer gesendeten Leistung ist; und
• Senden, durch das Leistungsplanungsmodul (30), einer ersten Sendeleistung P_{Send/1} an das erste DC/DC-Modul, wobei die erste Sendeleistung P_{Send/1} auf einer Wertbeziehung zwischen der ersten benötigten Leistung P_{ben/1} und der Gesamtüberschussleistung P_{AC/DC/GÜber} basiert,
wobei das Verfahren ferner umfasst:
• wenn ein erstes Erfassungsmodul unter der Vielzahl von Erfassungsmodulen (70) erfasst, dass ein Laststrom zwischen dem Busmodul (20) und dem ersten DC/DC-Modul größer als oder gleich einer voreingestellten Laststromschwelle ist und/oder ein Leckstrom zwischen dem Busmodul (20) und dem ersten DC/DC-Modul größer als oder gleich einer voreingestellten Leckstromschwelle ist, Steuern, durch das Leistungsplanungsmodul (30), des ersten Erfassungsmoduls, sodass das Busmodul (20) und das erste DC/DC-Modul in einem Leerlaufzustand sind, wobei das erste Erfassungsmodul zwischen dem Busmodul (20) und dem ersten DC/DC-Modul verbunden ist.

2. Verfahren zum Verwalten des Ladesäulensystems nach Anspruch 1, wobei, wenn die erste benötigte Leistung P_{ben/1} kleiner als oder gleich der Gesamtüberschussleistung P_{AC/DC/GÜber} ist, ein Verhältnis der ersten Sendeleistung P_{Sen/1} zu der ersten benötigten Leistung P_{ben/1} innerhalb eines ersten voreingestellten Bereichs fällt; oder, wenn die erste benötigte Leistung P_{ben/1} größer als die Gesamtüberschussleistung P_{AC/DC/GÜber} ist, ein Verhältnis der ersten Sendeleistung P_{Sen/1} zu der Gesamtüberschussleistung P_{AC/DC/GÜber} innerhalb eines zweiten voreingestellten Bereichs fällt.

3. Verfahren zum Verwalten des Ladesäulensystems nach Anspruch 1, wobei, wenn die erste benötigte Leistung P_{ben/1} größer als die Gesamtüberschussleistung P_{AC/DC/GÜber} ist, ein Verhältnis der ersten Sendeleistung P_{Sen/1} zu einer ersten Ausgangsleistung P_{Aus/1} innerhalb eines dritten voreingestellten Bereichs fällt; P_{Aus/1}-k₁×P_{ben/1}; und k₁=P_{GNenn}/P_{Gben}; wobei k₁ ein Ausgangsleistungsverhältnis ist, P_{GNenn} die Gesamtnennleistung des mindestens einen AC/DC-Moduls ist, P_{Gben} eine Summe sämtlicher zweiten benötigten Leistung P_{ben/2} und der ersten benötigten Leistung P_{ben/1} ist, und die zweite benötigte Leistung P_{ben/2} die benötigte Leistung einer zweiten zu ladenden Vorrichtung, die einem zweiten DC/DC-Modul entspricht, ist, wobei ein Ladeterminal, der mit der zweiten zu ladenden Vorrichtung in einem Ladezustand verbunden ist, ein zweiter Ladeterminal ist und ein DC/DC-Modul, das dem zweiten Ladeterminal in der Vielzahl von Ladeterminals entspricht, das zweite DC/DC-Modul ist; und
das Verfahren ferner umfasst:
Bestimmen, durch das Leistungsplanungsmodul, der zweiten benötigten Leistung P_{ben/2}, die durch sämtliche zweite DC/DC-Module in der Vielzahl von DC/DC-Modulen gesendet wird; und
Bestimmen, durch das Leistungsplanungsmodul, der Gesamtnennleistung P_{GNenn}, die durch das mindestens eine AC/DC-Modul gesendet wird.

4. Verfahren zum Verwalten des Ladesäulensystems nach Anspruch 3, wobei das Verfahren ferner umfasst: Senden, durch das Leistungsplanungsmodul, einer dritten Sendeleistung P_{Send/3} an das zweite DC/DC-Modul, wobei ein Verhältnis der dritten Sendeleistung P_{Send/3} zu einer zweiten Ausgangsleistung P_{Aus/2} innerhalb eines voreingestellten Bereichs fällt und P_{Aus/2}=k₁×P_{ben/2}.

5. Verfahren zum Verwalten des Ladesäulensystems nach Anspruch 1, wobei das Verfahren ferner umfasst:
wenn die erste benötigte Leistung P_{ben/1} größer als die Gesamtüberschussleistung P_{AC/DC/GÜber} ist, Bestimmen, durch das Leistungsplanungsmodul, einer Priorität der ersten zu ladenden Vorrichtung; und
Bestimmen, durch das Leistungsplanungsmodul, der ersten Sendeleistung P_{Send/1} basierend auf einer Beziehung zwischen der Priorität der ersten zu ladenden Vorrichtung und einer Priorität einer zweiten zu ladenden Vorrichtung, wobei ein DC/DC-Modul, das einem zweiten Ladeterminal in der Vielzahl von Ladeterminals entspricht, ein zweites DC/DC-Modul ist, und ein Ladeterminal, der mit der zweiten zu ladenden Vorrichtung in einem Ladezustand verbunden ist, der zweite Ladeterminal ist.

6. Verfahren zum Verwalten des Ladesäulensystems nach Anspruch 5, wobei das Verfahren ferner umfasst:
wenn die Priorität der ersten zu ladenden Vorrichtung höher als eine Priorität einer oder mehrerer zweiter zu ladender Vorrichtungen ist, Bestimmen, durch das Leistungsplanungsmodul, einer dritten benötigten Leistung P_{ben/3} einer zu ladenden Vorrichtung von einem Typ-1, wobei die zu ladende Vorrichtung von dem Typ-1 eine zweite zu ladende Vorrichtung ist, deren Priorität niedriger als die Priorität der ersten zu ladenden Vorrichtung ist; und
Bestimmen, durch das Leistungsplanungsmodul, der ersten Sendeleistung P_{Send/1} basierend auf einer Wertbeziehung zwischen der ersten benötigten Leistung P_{ben/1} und der zuweisbaren Leistung P_{zuw}, wobei die zuweisbare Leistung P_{zuw} gleich einer Summe der Gesamtüberschussleistung P_{AC/DC/GÜber} und der dritten benötigten Leistung P_{ben/3} sämtlicher zu ladender Vorrichtungen von dem Typ-1 ist.

7. Verfahren zum Verwalten des Ladesäulensystems nach Anspruch 6, wobei, wenn die erste benötigte Leistung P_{ben/1} größer als oder gleich der zuweisbaren Leistung P_{zuw} ist, ein Verhältnis der ersten Sendeleistung P_{Send/1} zu der zuweisbaren Leistung P_{zuw} innerhalb eines vierten voreingestellten Bereichs fällt.

8. Ladesäulensystem, umfassend mindestens ein AC/DC-Modul (10), ein Busmodul (20), ein Leistungsplanungsmodul (30), eine Vielzahl von DC/DC-Modulen (40), eine Vielzahl von Ladeterminals (50), die mit der Vielzahl von DC/DC-Modulen (40) in einer Eins-zu-Eins-Entsprechung verbunden sind, und eine Vielzahl von Erfassungsmodulen (70), wobei die Vielzahl von Erfassungsmodulen (70) zwischen dem Busmodul (20) und der Vielzahl von DC/DC-Modulen (40) in einer Eins-zu-Eins-Entsprechung verbunden sind, wobei ein Ausgangsende des mindestens einen AC/DC-Moduls (10) mit Eingangsenden der Vielzahl von DC/DC-Modulen (40) durch Verwenden des Busmoduls verbunden ist, das Leistungsplanungsmodul (30) mit dem Busmodul (20) verbunden ist und jeder Ladeterminal unter der Vielzahl von Ladeterminals (50) konfiguriert ist, um eine zu ladende Vorrichtung basierend auf der Sendeleistung, die durch das entsprechende DC/DC-Modul bestimmt wird, zu laden, wobei das Ladesäulensystem konfiguriert ist, um ein beliebiges der Verfahren nach Ansprüchen 1 bis 7 durchzuführen.

## Revendications

1. Procédé de gestion d'un système de pile de charge, dans lequel le système de pile de charge comprend au moins un module CA/CC (10), un module de bus (20), un module de planification de puissance (30), une pluralité de modules CC/CC (40), une pluralité de bornes de charge (50) qui sont connectées à la pluralité de modules CC/CC (40) dans une correspondance biunivoque, et une pluralité de modules de détection (70), dans lequel la pluralité de modules de détection (70) sont connectées entre le module de bus (20) et la pluralité de modules CC/CC (40) dans une correspondance biunivoque, dans lequel une extrémité de sortie de l'au moins un module CA/CC (10) est connectée à des extrémités d'entrée de la pluralité de modules CC/CC (40) à l'aide du module de bus, le module de planification de puissance (30) est connecté au module de bus (20), et chaque borne de charge parmi la pluralité de bornes de charge est conçue pour charger un dispositif à charger en fonction de la puissance de transmission déterminée par le module CC/CC correspondant ; et
le procédé comprenant :
• lorsqu'une première borne de charge de la pluralité de bornes de charge (50) est connectée à un premier dispositif à charger, la détermination, par le module de planification de puissance (30), de la première puissance nécessaire P_{nee/1} transmise par un premier module CC/CC connecté de manière correspondante à la première borne de charge, dans lequel la première puissance nécessaire P_{nee/1} est la puissance nécessaire du premier dispositif à charger ;
• la détermination, par le module de planification de puissance (30), d'une puissance excédentaire totale P_{AC/DC/TSur} transmise par l'au moins un module CA/CC (10), dans lequel la puissance excédentaire totale P_{AC/DC/TSur} est une différence entre la puissance nominale totale de l'au moins un module CA/CC (10) et la puissance transmise ; et
• la transmission, par le module de planification de puissance (30), d'une première puissance de transmission P_{tra/1} au premier module CC/CC, la première puissance de transmission P_{tra/1} étant basée sur une relation de valeur entre la première puissance nécessaire P_{nee/1} et la puissance excédentaire totale P_{AC/DC/TSur},
dans lequel le procédé comprend en outre :
• lorsqu'un premier module de détection parmi la pluralité de modules de détection (70) détecte qu'un courant de charge entre le module de bus (20) et le premier module CC/CC est supérieur ou égal à un seuil de courant de charge prédéfini, et/ou qu'un courant de fuite entre le module de bus (20) et le premier module CC/CC est supérieur ou égal à un seuil de courant de fuite prédéfini, la commande, par le module de planification de puissance (30), du premier module de détection, de sorte que le module de bus (20) et le premier module CC/CC sont dans un état de circuit ouvert, dans lequel le premier module de détection est connecté entre le module de bus (20) et le premier module CC/CC.

2. Procédé de gestion du système de pile de charge selon la revendication 1, dans lequel lorsque la première puissance nécessaire P_{nee/1} est inférieure ou égale à la puissance excédentaire totale P_{AC/DC/TSur}, un rapport de la première puissance de transmission P_{tra/1} à la première puissance nécessaire P_{nee/1} se situe dans une première plage prédéfinie ; ou lorsque la première puissance nécessaire P_{nee/1} est supérieure à la puissance excédentaire totale P_{AC/DC/TSur}, un rapport de la première puissance de transmission P_{tra/1} à la puissance excédentaire totale P_{AC/DC/TSur} se situe dans une deuxième plage prédéfinie.

3. Procédé de gestion du système de pile de charge selon la revendication 1, dans lequel lorsque la première puissance nécessaire P_{nee/1} est supérieure à la puissance excédentaire totale P_{AC/DC/TSur}, un rapport de la première puissance de transmission P_{tra/1} à la première puissance de sortie P_{put/1} se situe dans une troisième plage prédéfinie ; P_{put/1} = k₁ × P_{nee/1} ; et k₁ = P_{Trat}/ P_{Tnee}; où k₁ est un rapport de puissance de sortie, P_{Trat} est la puissance nominale totale de l'au moins un module CA/CC, P_{Tnee} est la somme de toutes les secondes puissances nécessaires P_{nee/2} et de la première puissance nécessaire P_{nee/1}, et la seconde puissance nécessaire P_{nee/2} est la puissance nécessaire d'un second dispositif à charger correspondant à un second module CC/CC, dans lequel une borne de charge connectée au second dispositif à charger dans un état de charge est une deuxième borne de charge, et un module CC/CC correspondant à la deuxième borne de charge dans la pluralité de bornes de charge est le second module CC/CC ; et
le procédé comprend en outre :
la détermination, par le module de planification de puissance, de la seconde puissance nécessaire P_{nee/2} transmise par tous les seconds modules CC/CC dans la pluralité de modules CC/CC ; et
la détermination, par le module de planification de puissance, de la puissance nominale totale P_{Trat} transmise par l'au moins un module CA/CC.

4. Procédé de gestion du système de pile de charge selon la revendication 3, dans lequel le procédé comprend en outre : la transmission, par le module de planification de puissance, d'une troisième puissance de transmission P_{tra/3} au second module CC/CC, dans lequel un rapport de la troisième puissance de transmission P_{tra/3} à une seconde puissance de sortie P_{put/2} se situe dans une plage prédéfinie, et P_{put/2} = k₁ × P_{nee/2}.

5. Procédé de gestion du système de pile de charge selon la revendication 1, dans lequel le procédé comprend en outre :
lorsque la première puissance nécessaire P_{nee/1} est supérieure à la puissance excédentaire totale P_{AC/DC/TSur}, la détermination, par le module de planification de puissance, d'une priorité du premier dispositif à charger ; et
la détermination, par le module de planification de puissance, de la première puissance de transmission P_{tra/1} en fonction d'une relation entre la priorité du premier dispositif à charger et une priorité d'un second dispositif à charger, dans lequel un module CC/CC correspondant à une deuxième borne de charge dans la pluralité de bornes de charge est un second module CC/CC, et une borne de charge connectée au second dispositif à charger dans un état de charge est la deuxième borne de charge.

6. Procédé de gestion du système de pile de charge selon la revendication 5, dans lequel le procédé comprend en outre :
lorsque la priorité du premier dispositif à charger est supérieure à une priorité d'un ou de plusieurs seconds dispositifs à charger, la détermination, par le module de planification de puissance, de la troisième puissance nécessaire P_{nee/3} d'un dispositif à charger de type 1, dans lequel le dispositif à charger de type 1 est un second dispositif à charger dont la priorité est inférieure à la priorité du premier dispositif à charger ; et
la détermination, par le module de planification de puissance, de la première puissance de transmission P_{tra/1} en fonction d'une relation de valeur entre la première puissance nécessaire P_{nee/1} et la puissance attribuable Pₐₗₗₒ, dans lequel la puissance attribuable Pₐₗₗₒ est égale à une somme de la puissance excédentaire totale P_{AC/DC/TSur} et de la troisième puissance nécessaire P_{nee/3} de tous les dispositifs à charger de type 1.

7. Procédé de gestion du système de pile de charge selon la revendication 6, dans lequel lorsque la première puissance nécessaire P_{nee/1} est supérieure ou égale à la puissance attribuable Pₐₗₗₒ, un rapport de la première puissance de transmission P_{tra/1} à la puissance attribuable Pₐₗₗₒ se situe dans une quatrième plage prédéfinie.

8. Système de pile de charge comprenant au moins un module CA/CC (10), un module de bus (20), un module de planification de puissance (30), une pluralité de modules CC/CC (40), une pluralité de bornes de charge (50) qui sont connectées à la pluralité de modules CC/CC (40) dans une correspondance biunivoque, et une pluralité de modules de détection (70), dans lequel la pluralité de modules de détection (70) sont connectés entre le module de bus (20) et la pluralité de modules CC/CC (40) dans une correspondance biunivoque, dans lequel une extrémité de sortie de l'au moins un module CA/CC (10) est connectée aux extrémités d'entrée de la pluralité de modules CC/CC (40) à l'aide du module de bus, le module de planification de puissance (30) est connecté au module de bus (20), et chaque borne de charge parmi la pluralité de bornes de charge (50) est conçue pour charger un dispositif à charger en fonction de la puissance de transmission déterminée par le module CC/CC correspondant, dans lequel le système de pile de charge est configuré pour effectuer l'un quelconque des procédés selon les revendications 1 à 7.
